(19) Europäisches Patentamt
European Patent Office
Office européen des brevets

(11) EP 3 503 263 A1

(12) **EUROPEAN PATENT APPLICATION**
published in accordance with Art. 153(4) EPC

(43) Date of publication:
**26.06.2019 Bulletin 2019/26**

(21) Application number: **17841507.1**

(22) Date of filing: **15.08.2017**

(51) Int Cl.:
***H01M 4/133*** *(2010.01)* ***H01M 4/13*** *(2010.01)*
***H01M 4/134*** *(2010.01)* ***H01M 4/139*** *(2010.01)*
***H01M 4/1393*** *(2010.01)* ***H01M 4/1395*** *(2010.01)*
***H01M 4/36*** *(2006.01)* ***H01M 4/38*** *(2006.01)*
***H01M 4/48*** *(2010.01)* ***H01M 4/587*** *(2010.01)*
***H01M 4/62*** *(2006.01)* ***H01M 10/0566*** *(2010.01)*

(86) International application number:
**PCT/JP2017/029378**

(87) International publication number:
**WO 2018/034285 (22.02.2018 Gazette 2018/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **18.08.2016 JP 2016160748**

(71) Applicants:
- **Mitsui Chemicals, Inc.**
  **Minato-ku**
  **Tokyo 105-7122 (JP)**
- **Shin-Etsu Chemical Co., Ltd.**
  **Tokyo 100-0004 (JP)**

(72) Inventors:
- **NISHIURA, Katsunori**
  **Chiba 299-0265 (JP)**
- **FANG, Nan**
  **Tokyo 105-7122 (JP)**
- **HIROSE, Takakazu**
  **Gunma 379-0224 (JP)**
- **FURUYA, Masahiro**
  **Gunma 379-0224 (JP)**

(74) Representative: **Hoffmann Eitle**
**Patent- und Rechtsanwälte PartmbB**
**Arabellastraße 30**
**81925 München (DE)**

# (54) NEGATIVE ELECTRODE FOR NONAQUEOUS-ELECTROLYTE SECONDARY CELL, NONAQUEOUS-ELECTROLYTE SECONDARY CELL, AND METHOD FOR MANUFACTURING NEGATIVE ELECTRODE FOR NONAQUEOUS-ELECTROLYTE SECONDARY CELL

(57) A negative electrode for a nonaqueous-electrolyte secondary cell, being predoped by immersion in a solution containing ions of an alkali metal and a catalyst, and the weight and volume tend not to increase due to the predoping, and initial charge/discharge efficiency is increased, is provided. The negative electrode includes a negative-electrode mix layer containing: an alloy-based material (A) that includes silicon or tin capable of absorbing an alkali metal or an alkali earth metal; carbon particles (B); a carboxylic-acid-salt-containing polymer (C); and a straight-chain polyphenylene compound (D), the ratio of the alloy-based material (A) to the total of the (A) and (B) being 10 vol% or more and 60 vol% or less, the amount of carboxylic-acid-salt-containing polymer (C) in the negative-electrode mix layer being 4-13 mass%, and the degree of neutralization of the carboxylic-acid-salt-containing polymer (C) being 50% or more.



Printed by Jouve, 75001 PARIS (FR)

## Description

Technical Field

The present invention relates to a negative electrode for a non-aqueous electrolyte secondary battery, a non-aqueous electrolyte secondary battery, and a method for producing a negative electrode for a non-aqueous electrolyte secondary battery.

Background Art

Non-aqueous electrolyte secondary batteries such as lithium ion secondary batteries have been widely used as power sources for electronic apparatuses such as mobile phones and digital cameras in recent years. The non-aqueous electrolyte secondary batteries described above include electrodes capable of absorbing and desorbing an alkali metal such as lithium and sodium or alkaline earth metal (also simply referred to as "alkali metals" hereinbelow) (a positive electrode and a negative electrode) and an electrolyte solution.

As the negative electrode active material of non-aqueous electrolyte secondary batteries, carbon materials have been predominantly used. However, use of an alloy-based material containing silicon or tin in the negative electrode active material has been recently expected to be able to further enlarge the discharge capacity of non-aqueous electrolyte secondary batteries. In a negative electrode active material in which an alloy-based material containing silicon or tin is employed, in order to enhance the charge/discharge efficiency in an initial cycle, a technique for allowing the negative electrode active material described above to absorb the alkali metals described above before production of a battery has been developed (allowing a negative electrode active material to absorb alkali metals in advance is also simply referred to as "predoping" hereinbelow).

For example, PLT 1 describes a method in which SiO is immersed in a solution prepared by dissolving lithium ions and a polycyclic aromatic compound (naphthalene, anthracene, phenanthrene, or the like) in a chain monoether to allow the SiO to absorb lithium. According to this method, the polycyclic aromatic compound functions as a catalyst during the immersion, and thus the lithium ions are absorbed by the SiO. According to PLT 1, it is supposed that the SiO can be easily predoped with lithium in a short period. Additionally, according to PTL 1, it is supposed that use of the SiO thus predoped as a negative electrode active material for lithium ion secondary batteries enables lithium ion secondary batteries having a large discharge capacity to be provided.

In PLT 2, it is supposed that, in a negative electrode material for non-aqueous electrolyte secondary batteries that includes a silicon compound containing a Li compound and a carbon material therein, as a negative electrode active material, incorporation of metal ions in the form of a salt of a group 1 metal in the negative electrode material can suppress elution of the Li compound inside the silicon compound into an organic solvent or water solvent. It is also supposed that incorporation of metal ions in the negative electrode material enables the flowability of a negative electrode slurry to remain and additionally prevents erosion of the silicon compound to thereby prevent degradation of the battery characteristics. According to PLT 2, it is mentioned that, when the negative electrode material contains a binding agent containing at least one of a carbonyl group, a hydroxy group, and an amino group, the functional group attracts metal ions to thereby localize the metal salt in the vicinity of the carbon material, and thus, a reduction in the initial charge/discharge efficiency, which is caused by localization of the metal salt at the upper part of the electrode or in the vicinity of the outer shell of the silicon compound, is suppressed.

Citation List

Patent Literature

PTL 1
Japanese Patent Application Laid-Open No. 2005-108826
PTL 2
Japanese Patent Application Laid-Open No. 2015-149224

Summary of Invention

Technical Problem

However, our study has found that, although the initial charge/discharge efficiency can be enhanced by predoping the silicon compound contained in the negative electrode with lithium in accordance with the method described in PLT 1, the weight increase and volume expansion of the negative electrode mixture layer after predoping are large to thereby problematically lower the energy density of the battery. As the cause of the weight increase, it is presumed that the polycyclic aromatic compound attaches to the mixture layer. Meanwhile, as the cause of the volume expansion, it is presumed that swelling of the binding agent used in the mixture layer by solution including lithium ions and the polycyclic aromatic compound dissolved expanded the volume on predoping.

Furthermore, in the method of PLT 1, in which SiO was in contact with the solution described above for three days in Example, for example, predoping with lithium was not necessarily enabled in a sufficiently short period. Thus, when predoping is attempted in a shorter period in consideration of practical battery manufacturing, the amount of lithium for predoping per unit amount of the negative electrode active material was small, and problematically, the initial charge/discharge efficiency was low.

In PLT 2, as mentioned above, binding agents suitable for the silicon compound predoped have been suggested. However, these binding agents have been suggested as binding agents for suitable when a silicon compound that has been already doped is used to form a negative electrode slurry. Even when these binding agents were used to produce a negative electrode and then predoping was performed in accordance with the method of PLT 1, it was not possible to suppress the weight increase and volume expansion of the negative electrode mixture layer after predoping.

The present invention has been achieved in view of such a problem. It is an object of the present invention to provide a negative electrode for a non-aqueous electrolyte secondary battery predoped by immersion in a solution containing alkali metal ions and a catalyst, wherein the weight and volume of the negative electrode are unlikely to increase due to the predoping and the initial charge/discharge efficiency can be further enhanced, a non-aqueous electrolyte secondary battery including the negative electrode, and a method for producing a negative electrode for a non-aqueous electrolyte secondary battery, the method enabling efficient predoping with an alkali metal or an alkali earth metal.

Solution to Problem

A first aspect of the present invention relates to a negative electrode for a non-aqueous electrolyte secondary battery to be described below.

[1] A negative electrode for a non-aqueous electrolyte secondary battery, comprising a negative electrode mixture layer comprising at least an alloy-based material that contains silicon or tin capable of absorbing an alkali metal or an alkali earth metal (A), carbon particles (B), a carboxylate-containing polymer (C), and a linear polyphenylene compound (D), wherein when the total volume of the alloy-based material (A) and the carbon particles (B) contained in the negative electrode mixture layer is taken as 100vol%, the proportion of the volume of the alloy-based material (A) is 10vol% or more and less than 60vol%, the content of the carboxylate-containing polymer (C) in the negative electrode mixture layer is 4mass% or more and 13mass% or less based on the total mass of the negative electrode mixture layer, and the degree of neutralization of the carboxylate-containing polymer (C) is 50% or more.

[2] The negative electrode for a non-aqueous electrolyte secondary battery according to [1], wherein the carboxylate-containing polymer (C) contains 50mol% or more of a structure represented by the following formula (1).

[Formula 1]

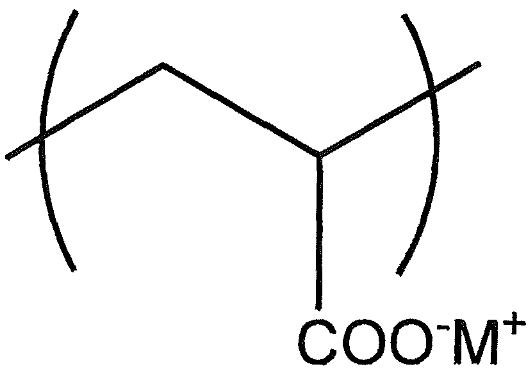

. . . Formula (1)

In formula (1), $M^+$ is at least one cation selected from $Li^+$, $Na^+$, $K^+$, and $NH_4^+$, and the carboxylate-containing polymer

(C) may have a plurality of structures represented by the formula (1) in each of which $M^+$ is different.

[3] The negative electrode for a non-aqueous electrolyte secondary battery according to [1] or [2], wherein the alloy-based material (A) is a silicon oxide represented by $SiO_x$ ($0.5 \leq x \leq 1.5$).

[4] The negative electrode for a non-aqueous electrolyte secondary battery according to [3], wherein at least a portion of the silicon oxide is coated with carbon, and the mass of the carbon for coating is 2mass% or more and 50mass% or less based on the total mass of the silicon oxide contained in the negative electrode mixture layer.

[5] The negative electrode for a non-aqueous electrolyte secondary battery according to any one of [1] to [4], wherein the carbon particles (B) comprise at least one graphite selected from the group consisting of natural graphite, artificial graphite, and carbon-coated graphite.

[6] The negative electrode for a non-aqueous electrolyte secondary battery according to any one of [1] to [5], wherein the degree of neutralization of the carboxylate-containing polymer (C) is less than 97%.

[7] The negative electrode for a non-aqueous electrolyte secondary battery according to any one of [1] to [6], wherein the carboxylate-containing polymer (C) contains a lithium salt of polyacrylic acid or a sodium salt of polyacrylic acid.

[8] The negative electrode for a non-aqueous electrolyte secondary battery according to any one of [1] to [7], wherein the linear polyphenylene compound (D) is a biphenyl, terphenyl, or derivative thereof.

[9] The negative electrode for a non-aqueous electrolyte secondary battery according to any one of [1] to [8], wherein the alloy-based material (A) contains an alkali metal or an alkali earth metal.

A second aspect of the present invention relates to a non-aqueous electrolyte secondary battery to be described below.

[10] A non-aqueous electrolyte secondary battery comprising the negative electrode for a non-aqueous electrolyte secondary battery according to any one of [1] to [9].

A third aspect of the present invention relates to a method for producing a negative electrode for a non-aqueous electrolyte secondary battery to be described below.

[11] A method for producing a negative electrode for a non-aqueous electrolyte secondary battery, the method comprising: obtaining a negative electrode mixture layer by bringing an active material-containing layer comprising at least an alloy-based material that contains silicon or tin capable of absorbing an alkali metal or an alkali earth metal (A), carbon particles (B), and a carboxylate-containing polymer (C), the carboxylate-containing polymer (C) having a degree of neutralization of 50% or more, into contact with an alkali metal or an alkali earth metal that can be absorbed by the alloy-based material (A) in the presence of a linear polyphenylene compound (D), wherein: when the total volume of the alloy-based material (A) and the carbon particles (B) contained in the negative electrode mixture layer is taken as 100vol%, the proportion of the volume of the alloy-based material (A) is 10vol% or more and less than 60vol%, and the content of the carboxylate-containing polymer (C) in the negative electrode mixture layer is 4mass% or more and 13mass% or less based on the total mass of the negative electrode mixture layer.

[12] The negative electrode for a non-aqueous electrolyte secondary battery according to [11], wherein the obtaining a negative electrode mixture layer is immersing the active material-containing layer in a solution including the alkali metal or the alkali earth metal and a linear polyphenylene compound (D) dissolved.

[13] The method for producing a negative electrode for a non-aqueous electrolyte secondary battery according to [11] or [12], further comprising immersing the negative electrode mixture layer obtained in a solvent in which the linear polyphenylene compound (D) is soluble.

[14] The method for producing a negative electrode for a non-aqueous electrolyte secondary battery according to [13], wherein the solvent in which the linear polyphenylene compound (D) is soluble is tetrahydrofuran.

A fourth aspect of the present invention relates to a non-aqueous electrolyte secondary battery to be described below.

[15] A non-aqueous electrolyte secondary battery, comprising a positive electrode, a negative electrode and an electrolyte solution and containing at least one of an alkali metal and an alkali earth metal, wherein the negative electrode comprises a negative electrode mixture layer comprising at least an alloy-based material that contains silicon or tin capable of absorbing at least one of the alkali metal and the alkali earth metal (A), carbon particles (B), a carboxylate-containing polymer (C), and a linear polyphenylene compound (D), when the total volume of the alloy-based material (A) and the carbon particles (B) contained in the negative electrode mixture layer is taken as 100vol%, the proportion of the volume of the alloy-based material (A) is 10vol% or more and less than 60vol%, the content of the carboxylate-containing polymer (C) in the negative electrode mixture layer is 4mass% or more and 13mass% or less based on the total mass of the negative electrode mixture layer, the degree of neutralization of the carboxylate-containing polymer (C) is 50% or more, and the total molar amount of the alkali metal and the alkali earth metal contained in the negative electrode at full charge is larger than the molar amount of the alkali metal and the alkali earth metal to be calculated from the capacity of the positive electrode active material possessed by the positive electrode.

Advantageous Effects of Invention

According to the present invention, provided are a negative electrode for a non-aqueous electrolyte secondary battery predoped by immersion in a solution containing alkali metal ions and a catalyst, wherein the weight and volume of the negative electrode are unlikely to increase due to the predoping and the initial charge/discharge efficiency can be further enhanced, a non-aqueous electrolyte secondary battery including the negative electrode, and a method for producing a negative electrode for a non-aqueous electrolyte secondary battery, the method enabling efficient predoping with an alkali metal or an alkali earth metal.

Description of Embodiments

1. Negative Electrode for Non-Aqueous Electrolyte Secondary Battery

A negative electrode for a non-aqueous electrolyte secondary battery according to one embodiment of the present invention (hereinbelow, simply also referred to as "a negative electrode for a secondary battery") has a negative electrode mixture layer including at least an alloy-based material that contains silicon or tin capable of absorbing an alkali metal or an alkali earth metal (A), carbon particles (B), a carboxylate-containing polymer (C), and a linear polyphenylene compound (D). The negative electrode for a secondary battery may additionally have a collector. The structure of the negative electrode for a secondary battery can be appropriately selected depending on the application of a non-aqueous electrolyte secondary battery to be applied, and may be a laminate or the like including a sheet collector and negative electrode mixture layers disposed on both the faces of the collector, for example. The negative electrode for a secondary battery can be also used as an electrode for a capacitor, such as a lithium-ion capacitor.

As a negative electrode for a non-aqueous electrolyte secondary battery, use of negative electrodes containing an alloy-based material such as silicon or tin as a negative electrode active material has been contemplated. The negative electrodes containing these alloy-based materials are, however, likely to have a large irreversible capacity during an initial cycle, and thus, it is difficult to enhance the energy density, which has been a problem. It is known that predoping a negative electrode active material with alkali metals in producing negative electrodes reduces such an irreversible capacity. However, in the method described in PLT 1 or the like, when a predoping period is short, the amount of the alkali metals predoping in the negative electrode active material is small. Thus, during the initial charge/discharge reaction (e.g., in the case of lithium, $SiO + 4Li^+ + 4e^- \rightarrow 3/4Li_4Si + 1/4Li_4SiO_4$), the amount of the negative electrode active material that reacts with alkali metal ions (negative electrode active material that did not capture Li in predoping; SiO in the above formula) increases. As a result, the amount of the irreversible component formed by the initial charge/discharge reaction ($Si_4LiO_4$ in the above formula) increases to lead to an insufficient increase in the initial charge/discharge efficiency.

In contrast, the negative electrode for a secondary battery includes the alloy-based material (A) and the carbon particles (B), as the negative electrode active material. Combination of the alloy-based material (A) and the carbon particles (B) as the negative electrode active material further increases the amount of the alkali metals to be absorbed by predoping, and capture of alkali metals reduces the amount of the negative electrode active material that does not cause the initial charge/discharge reaction to thereby decrease the amount of the irreversible component to be formed during the initial charge/discharge reaction. Accordingly, the negative electrode for a secondary battery can enhance the initial charge/discharge efficiency of the non-aqueous electrolyte secondary battery to thereby enhance the energy density. In other words, this means that combination of the alloy-based material (A) and the carbon particles (B) can reduce the time required when the negative electrode active material is predoped with alkali metals.

In the present invention, additional use of the linear polyphenylene compound (D) in predoping can suppress an increase in the mass and the volume of the negative electrode mixture layer due to predoping, compared with that in the case in which a polycyclic aromatic compound is employed as the catalyst as in PLT 1. It is presumed that this is because the linear polyphenylene compound (D) has smaller interaction with the electrode mixture layer, especially with the carbon particles (B), than the polycyclic aromatic compound to thereby be unlikely to attach the electrode mixture layer.

However, in accordance with our findings, a compound comprising the linear polyphenylene compound (D) and lithium, which includes a smaller amount of lithium for predoping than that in a compound comprising a polycyclic aromatic compound and lithium, is unlikely to enhance the initial charge/discharge efficiency. In contrast, we have found that use of a polymer having carboxyl groups in which the carboxyl groups are neutralized (carboxylate-containing polymer (C)) and, in addition, adjustment of the amount and the degree of neutralization thereof can sufficiently increase the amount of predoping, suppress an increase in the mass and the volume of the negative electrode mixture layer due to predoping, and sufficiently enhance the initial charge/discharge efficiency. It is presumed that the initial charge/discharge efficiency was enhanced because use of the carboxylate-containing polymer (C) facilitates movement of the lithium ions in the polymer and thus, the amount of predoping increased. It is also presumed that use of the carboxylate-containing polymer (C) enhanced the swelling resistance to the solution including lithium ions and the linear polyphenylene

compound (B) dissolved to thereby suppress the volume expansion in predoping.

In the negative electrode for a secondary battery, the content of the carboxylate-containing polymer (C) contained in the negative electrode mixture layer is 4mass% or more and 13mass% or less based on the total mass of the negative electrode mixture layer. With a content of the carboxylate-containing polymer (C) of 4mass% or more, an effect of increasing the amount of predoping by the carboxylate-containing polymer (C) is sufficiently exerted. With a content of the carboxylate-containing polymer (C) of 13mass% or less, contact of the negative electrode active material with alkali metals in predoping is unlikely to be inhibited due to the carboxylate-containing polymer (C), and thus, it is possible to allow a sufficient amount of the alkali metals to be absorbed by predoping. With a content of the carboxylate-containing polymer (C) within the above range, exfoliation of the negative electrode mixture layer caused by contact with the alkali metals is more unlikely to occur in predoping.

In the negative electrode for a secondary battery, the degree of neutralization of the carboxylate-containing polymer (C) is 50% or more. When the carboxylate-containing polymer (C) has a degree of neutralization of 50% or more, alkali metal ions or alkali earth metal ions are more likely to move in the polymer to thereby increase the amount of predoping. Thus, it is possible to sufficiently enhance the initial charge/discharge efficiency. Additionally, when the carboxylate-containing polymer (C) has a degree of neutralization of 50% or more, enhancement in the swelling resistance to the solution including lithium ions and the linear polyphenylene compound (B) dissolved enables expansion of the volume of the negative electrode mixture layer due to predoping to be further suppressed.

Each of the components of the negative electrode for a secondary battery will be described below.

1-1. Negative Electrode Mixture Layer

The negative electrode mixture layer contains at least an alloy-based material (A), carbon particles (B), a carboxylate-containing polymer (C), and a linear polyphenylene compound (D).

The alloy-based material (A) and the carbon particles (B) are materials that function as a negative electrode active material (capable of absorbing and desorbing alkali metals).

The carboxylate-containing polymer (C), which functions as a binding agent, binds the alloy-based materials (A) to each other, the alloy-based material (A) with the carbon particles (B), the alloy-based material (A) or the carbon particles (B) with a collector mentioned below, or the like.

The linear polyphenylene compound (D) is contained in the negative electrode mixture layer when the negative electrode active material (particularly, the alloy-based material (A) and the carbon particles (B)) is predoped with alkali metals.

The negative electrode mixture layer may contain other materials as required and may contain, for example, a conductive aid (E) and the like.

(Alloy-based Material (A))

The alloy-based material (A) is a material that contains silicon or tin capable of absorbing an alkali metal or an alkali earth metal as a constituent element and functions as a negative electrode active material (capable of absorbing and desorbing alkali metals). The alloy-based material (A), which forms a composite with alkali metals by predoping, may not substantially contain alkali metals after the alkali metals are desorbed by discharge of the battery or the like.

When the total volume of the alloy-based material (A) and the carbon particles (B) contained in the negative electrode mixture layer is taken as 100vol%, the proportion of the volume of the alloy-based material (A) is 10vol% or more and less than 60vol%, preferably 10vol% or more and less than 50vol%, more preferably 10vol% or more and less than 40vol%, more preferably 10vol% or more and less than 30vol%. With a proportion of the volume of the alloy-based material (A) of 10vol% or more, it is possible to increase the amount of the alkali metals to be absorbed by predoping to thereby reduce the amount of an irreversible component to be formed. As a result, the initial charge/discharge efficiency of the non-aqueous electrolyte secondary battery having the negative electrode for a secondary battery increases to thereby sufficiently enhance the energy density. With a proportion of the volume of the alloy-based material (A) of less than 60vol%, the rate of predoping is high, and thus, the initial charge/discharge efficiency increases. Additionally, volume expansion in predoping can be suppressed. The above volume ratio is determined with the contents and true specific gravities of the alloy-based material (A) and the carbon particles (B). The contents of the alloy-based material (A) and the carbon particles (B) are identified by a known method such as an electrochemical analysis method, fluorescent X-ray analysis method, ion chromatography, ICP mass spectrometry, and atomic absorption spectrometry or from the mass of each of the alloy-based material (A) and the carbon particles (B) used in preparing the negative electrode. Meanwhile, the true specific gravity can be measured using a solid sample pulverized into powder (the alloy-based material (A) and carbon particles (B)) by a method in accordance with JIS Z8807, and for example, can be measured as described below.

A dried pycnometer is left to stand in a desiccator until it reaches room temperature, and then the mass of the

pycnometer W1 is weighed. A sufficiently pulverized sample (alloy-based material (A) or carbon particles (B)) is placed in the pycnometer, and the mass W2 of (the pycnometer + the sample) is weighed. Subsequently, n-butanol is placed in the pycnometer such that the sample is sufficiently immersed for sufficient degassing. n-Butanol is further added and filled into the pycnometer, which is placed in a thermostatic water bath and allowed to reach 25°C. After the temperatures of n-butanol and the sample reach 25°C, the meniscus of n-butanol is aligned with the reference line, and the n-butanol and sample are left to stand until they reach room temperature. Then, the mass W3 of (the pycnometer + sample + n-butanol) is weighed. A pycnometer is filled only with n-butanol and placed in a thermostat to allow the temperature to reach 25°C. The meniscus of n-butanol is aligned with the reference line, and the n-butanol is left to stand until it reaches room temperature. Then the mass W4 of (the pycnometer + n-butanol) is weighed.

The true specific gravity can be calculated as follows from each of the masses W1, W2, W3, and W4 weighed as aforementioned.

$$\text{True specific gravity} = \{(W2 - W1) \times s\} / \{(W2 - W1) - (W3 - W4)\}$$

Wherein s is the specific gravity of n-butanol at 25°C.

The total content of the alloy-based material (A) and the carbon particles (B) described below contained in the negative electrode mixture layer is preferably 77mass% or more and 97mass% or less, more preferably 80mass% or more and 96mass% or less. With a total content of the alloy-based material (A) and the carbon particles (B) described below in the range described above, it is possible to sufficiently increase the amount of alkali metals that can be absorbed and desorbed to thereby sufficiently enlarge the discharge capacity of the non-aqueous electrolyte secondary battery.

The particle diameter $D_{50}$ of the alloy-based material (A) is preferably small in general, but when the particle diameter is extremely small, the material may become coarse due to aggregation. $D_{50}$ refers to a particle size at which the integrated value of the volume distribution in the particle size distribution measurement by a laser diffraction method corresponds to 50%, that is, a median diameter measured on the volume basis. From such a viewpoint, the particle diameter $D_{50}$ of the alloy-based material (A) is preferably 1 μm or more and 40 μm or less, more preferably 2 μm or more and 30 μm or less.

The type of alkali metals that can be absorbed by the alloy-based material (A) is not particularly limited, and is preferably, lithium, sodium, magnesium, potassium, and calcium, more preferably lithium and sodium, particularly preferably lithium.

Examples of the alloy-based material (A) containing silicon as a constituent element include (i) silicon particulates, (ii) alloys of magnesium, nickel, titanium, molybdenum, cobalt, calcium, chromium, copper, iron, manganese, niobium, tantalum, vanadium, tungsten, or zinc with silicon, (iii) compounds of boron, nitrogen, oxygen, or carbon with silicon, and (iv) composite materials of a metal exemplified in the above (ii) and a silicon compound exemplified in the above (iii).

Specific examples of the alloy-based material (A) containing silicon as a constituent element include $Mg_2Si$, $Ni_2Si$, $TiSi_2$, $MoSi_2$, $CoSi_2$, $NiSi_2$, $CaSi_2$, $CrSi_2$, $Cu_5Si$, $FeSi_2$, $MnSi_2$, $NbSi_2$, $TaSi_2$, $VSi_2$, $WSi_2$, and $ZnSi_2$ as the specific examples of the above (ii), $SiB_4$, $SiB_6$, SiC, $SiO_x$ ($0.5 \leq x \leq 1.5$), and $Si_3N_4$ as the specific examples of the above (iii), $Si_2N_2O$ of the specific examples as the above (iv), and LiSiO.

Examples of the alloy-based material (A) containing tin as a constituent element include (i) alloys of silicon, nickel, copper, iron, cobalt, manganese, zinc, indium, silver, titanium, germanium, bismuth, antimony, or chromium with tin, (ii) compounds of oxygen or carbon with tin, (iii) composite materials of a metal exemplified in the above (i) and a tin compound exemplified in the above (ii).

Specific examples of the alloy-based material (A) containing tin as a constituent element include $Mg_2Sn$ included in the specific examples as the above (i), $SnO_w$ ($0 < w \leq 2$) and LiSnO as the specific examples of the above (ii), and $SnSiO_3$ as the specific examples of the above (iii).

The alloy-based material (A) may contain only one alloy or compound containing silicon or tin or may contain two or more of these. The surface thereof may be coated with a carbon material or the like from the viewpoint of enhancing the electrical conductivity and the like.

Particularly preferred examples of the alloy-based material (A) include silicon oxides represented by $SiO_x$ ($0.5 \leq x \leq 1.5$) (also simply referred to as "silicon oxide" hereinbelow). In the present invention, $SiO_x$ ($0.5 \leq x \leq 1.5$) is a general formula indicating the generic formula of amorphous silicon oxides obtained from silicon dioxide ($SiO_2$) and metal silicon (Si) as the raw materials. When x is less than 0.5 in $SiO_x$ ($0.5 \leq x \leq 1.5$), the volume change during charging/discharging increases due to an increase in the proportion of the Si phase, and the cycling characteristics of the non-aqueous electrolyte secondary battery may deteriorate. When x exceeds 1.5, the proportion of Si phase may decrease to lead to a decrease in the energy density. A more preferred range of x is $0.7 \leq x \leq 1.2$.

At least a portion of the silicon oxide described above may also be coated with carbon in order to enhance the

electrical conductivity. When the silicon oxide described above has been coated with carbon, the amount of carbon deposited in the composite is preferably 2mass% or more and 50mass% or less, more preferably 3mass% or more and 40mass% or less, still more preferably 3mass% or more and 25mass% or less based on the total mass of the silicon oxide described above. When the amount of carbon deposited is 2mass% or more, the electrical conductivity of the silicon oxide sufficiently increases, and thus the power collection efficiency of the negative electrode for a secondary battery is likely to increase. Meanwhile, with an excessive amount of carbon deposited, the capacity of the non-aqueous electrolyte secondary battery in which the negative electrode for a secondary battery is employed may decrease. With an amount of carbon deposited of 50mass% or less, a decrease in the capacity is unlikely to occur.

The electrical conductivity of the silicon oxide coated with carbon is preferably $1 \times 10^{-6}$ S/m or more, more preferably $1 \times 10^{-4}$ S/m or more. The electrical conductivity described above is a value determined by filling a cylindrical cell having four terminals with a powder to be measured and measuring the voltage drop when an electrical current is applied to this powder.

(Carbon Particles (B))

The carbon particles (B), which are particles containing a graphite material, a material that functions as a negative electrode active material (capable of absorbing and desorbing alkali metals).

The content of the carbon particles (B) in the negative electrode mixture layer is more than 40vol% and 90vol% or less, preferably more than 50vol% and 90vol% or less, more preferably more than 60vol% and 90vol% or less, still more preferably more than 70vol% and 90vol% or less when the total volume of the alloy-based material (A) and the carbon particles (B) is taken as 100vol%. As mentioned above, with contents of the alloy-based material (A) and the carbon particles (B) in the range described above, it is possible to increase the amount of the alkali metals to be absorbed by predoping to thereby reduce the amount of an irreversible component to be formed. As a result, the initial charge/discharge efficiency of the non-aqueous electrolyte secondary battery having the negative electrode for a secondary battery increases to thereby sufficiently enhance the energy density. As mentioned above, with contents of the alloy-based material (A) and the carbon particles (B) in the range described above, the volume expansion in predoping can be suppressed. The volume ratio of the carbon particles (B) is calculated by the method mentioned above.

The particle diameter $D_{50}$ of the carbon particles (B) is not particularly limited and preferably 1 μm or more. $D_{50}$ refers to a particle size at which the integrated value of the volume distribution in the particle size distribution measurement by a laser diffraction method corresponds to 50%, that is, a median diameter measured on the volume basis. The particle diameter $D_{50}$ of carbon particles (B) is preferably 1.0 time or more and 8.0 times or less, more preferably 1.5 times or more and 6.5 times or less, still more preferably 2.0 times or more and less than 6.0 times the particle diameter $D_{50}$ of the alloy-based material (A). Setting the particle diameter $D_{50}$ of the carbon particles (B) to be equal to or greater than the particle diameter $D_{50}$ of the alloy-based material (A) leads to a reduction in the volume change in the negative electrode mixture layer associated with the charge/discharge cycle, enabling the negative electrode mixture layer to be unlikely to exfoliate and the like. Meanwhile, when the above ratio is 8.0 times or less, the specific surface area of the carbon particles (B) does not increase excessively, and a reduction in the capacity due to degradation of the carbon particles (B) by the electrolyte solution becomes unlikely to occur.

Specific examples of the carbon particles (B) include natural graphite, artificial graphite, hardly graphitizable carbon (hard carbon), easily graphitizable carbon (soft carbon), mesocarbon microbeads, particles formed of graphite particles and carbonaceous layer existing on the surface of the particles (i.e., carbon-coated graphite), and particles obtained by attaching carbon fiber onto graphite particles. Of these, the carbon particles (B) are preferably at least one of natural graphite, artificial graphite, and carbon-coated graphite. Use of these carbon particles suppresses predoping of the carbon particles (B) with lithium ions in predoping. Thus, the silicon compound is predoped with lithium ions more selectively to thereby allow the initial charge/discharge efficiency to be likely to increase. The shape of the carbon particles (B) may be any shape such as spherical, approximately spherical, and flat shapes. In the present invention, particles having an aspect ratio less than 10 are used as the carbon particles (B).

From the viewpoint of the charge/discharge efficiency of the negative electrode after predoping with alkali metals (e.g., charge/discharge efficiency after the electrode is left to stand for 24 hours in dry air), the carbon particles (B) preferably contains any of natural graphite, artificial graphite, and carbon-coated graphite.

The carbon particles (B) herein preferably has a total pore volume, measured by the nitrogen gas adsorption method, of $1.0 \times 10^{-2}$ $cm^3/g$ or more and $1.0 \times 10^{-1}$ $cm^3/g$ or less and an average pore diameter of 20 nm or more and 50 nm or less. The total pore volume and the average pore diameter respectively, preferably $1.5 \times 10^{-2}$ $cm^3/g$ or more and $9.0 \times 10^{-2}$ $cm^3/g$ or less and 25 nm or more and 40 nm or less, more preferably $2.0 \times 10^{-2}$ $cm^3/g$ or more and $7.0 \times 10^{-2}$ $cm^3/g$ or less and 25 nm or more and 35 nm or less. When the total pore volume and the average pore diameter of the carbon particles (B) fall within the above range, the electrolyte solution is likely to penetrate the active material. Accordingly, the negative electrode for a secondary battery containing the carbon particles (B), because of its high ionic conductivity and low electrode resistance, can enhance the charge/discharge capacity and load characteristics of the

non-aqueous electrolyte secondary battery. Additionally, when the total pore volume and the average pore diameter of the carbon particles (B) fall within the above range, even if the volume of the alloy-based material (A) expands during charging, the carbon particles (B) are elastically deformed to prevent deformation of the mixture layer. As a result, the negative electrode mixture layer is unlikely to exfoliate from the collector, and satisfactory cycling characteristics are likely to be maintained. Incidentally, at least one of the particle diameter $D_{50}$ and the total pore volume of the carbon particles (B) described above preferably falls within the range aforementioned.

The carbon particles (B) are more preferably secondary aggregates in which primary particles including the graphite material are aggregated or bonded. In this case, the primary particles of the carbon particles (B) preferably have a flat shape. When the carbon particles (B) have such a shape, satisfactory electrical conductivity is likely to be maintained even after the charge/discharge cycle, and an increase in the electrode resistance is likely to be prevented. As a result, it is possible to extend the cycle life of the non-aqueous electrolyte secondary battery. An example of the carbon particles (B) formed of flat primary particles includes MAG.

(Carboxylate-Containing Polymer (C))

The carboxylate-containing polymer (C) is a polymer that functions as a binding agent in the negative electrode mixture layer. The content of the carboxylate-containing polymer (C) contained in the negative electrode mixture layer is 4mass% or more and 13mass% or less, preferably 5mass% or more and 10mass% or less, more preferably 5mass% or more 8mass% or less based on the mass of the negative electrode mixture layer. With a content of the carboxylate-containing polymer (C) is 4mass% or more, an effect of increasing the amount of predoping by the carboxylate-containing polymer (C) is sufficiently exerted. Meanwhile, with a content of carboxylate-containing polymer (C) of 13mass% or less, the amount of the alkali metals to be absorbed by predoping further increases. The negative electrode for a secondary battery described above can enhance the initial charge/discharge efficiency of the non-aqueous electrolyte secondary battery to thereby enhance the energy density. Although the reason is not clear, it is assumed that, with a content of the carboxylate-containing polymer (C) of 13mass% or less, the alloy-based material (A) and the carbon particles (B), which are the active material, are not completely coated with the carboxylate-containing polymer (C). The alloy-based material (A) and the carbon particles (B) are partly exposed to allow the active material to be more likely to be predoped with alkali metals. The content of the carboxylate-containing polymer (C) can be calculated from the amount of charged when the negative electrode mixture layer is prepared or by an electrochemical analysis method, fluorescent X-ray analysis method, ion chromatography, ICP mass spectrometry, atomic absorption spectrometry or the like. Alternatively, the electrode is immersed in a solvent in which the binding agent is soluble and dissolved therein, and the residue after removal of the solvent is weighed to enable the binding agent to be quantified.

The carboxylate-containing polymer (C) is only required to be a salt formed by a polymer having carboxyl groups with metal ions or ammonium ions.

The carboxylate-containing polymer (C), which has formed the salt described above, has a degree of neutralization of 50% or more. When the degree of neutralization is 50% or more, capture of lithium ions by the carboxylate-containing polymer (C) can be suppressed to thereby enable the initial charge/discharge efficiency to be sufficiently enhanced. Additionally, when the carboxylate-containing polymer (C) has a degree of neutralization of 50% or more, the swelling resistance to a solution including an alkali metal or the alkali earth metal and the linear polyphenylene compound (D) dissolved is enhanced. Thus, it is possible to further suppress expansion of the volume of the negative electrode mixture layer due to predoping. Meanwhile, when the degree of neutralization is excessively high, the affinity between the active material and the carboxylate-containing polymer (C) decreases and thus, the initial charge/discharge efficiency is unlikely to sufficiently increase. Furthermore, the expansion of the volume of the negative electrode mixture layer due to predoping may not be able to be sufficiently suppressed. For this reason, from the viewpoint of further enhancing the initial charge/discharge efficiency as well as further suppressing the expansion of the volume of the negative electrode mixture layer due to predoping, the degree of neutralization of the carboxylate-containing polymer (C) is preferably less than 97%, more preferably less than 95%.

Examples of the polymer having carboxyl groups include carboxymethyl cellulose (CMC) and polyacrylic acid (PAA). The polymer having carboxyl groups may be a homopolymer constituted by the same repeating units or may be a copolymer constituted by a plurality of repeating units.

Additionally, the carboxylate-containing polymer (C) preferably contains 50mol% or more of the structure represented by the following formula (1) when the total moles of the repeating unit possessed by the polymer are taken as 100mol%. When 50mol% or more of the structure represented by the following formula is contained, the swelling resistance to the electrolyte solution is enhanced, and the expansion of the volume of the negative electrode mixture layer due to predoping can be further suppressed. The proportion of the structure represented by the following formula is more preferably 50mol% or more and less than 100mol%, still more preferably 70mol% or more and less than 98mol%.

[Formula 2]

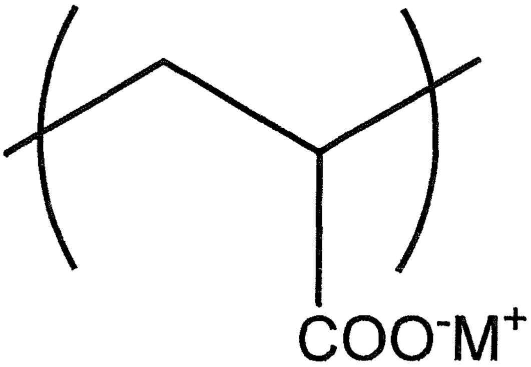

• • • Formula (1)

Wherein, $M^+$ is at least one cation selected from $Li^+$, $Na^+$, $K^+$, and $NH_4^+$. $M^+$ is preferably $Li^+$, $Na^+$, and $K^+$, more preferably $Li^+$ and $Na^+$. The carboxylate-containing polymer (C) may have a plurality structures represented by the formula (1) in each of which $M^+$ is different.

The structure of the carboxylate-containing polymer (C) can be measured by an electrochemical analysis method, nuclear magnetic resonance method, ICP mass spectrometry, infrared absorption spectrometry, Raman spectroscopy, or the like.

Examples of the metal ion include ions of an alkali metal or an alkali earth metal. As the metal ions, lithium ions, sodium ions, magnesium ions, potassium ions, and calcium ions are preferable, lithium ions and sodium ions are more preferable, and lithium ions are particularly preferable. The metal ions are preferably alkali metals which can be absorbed by the alloy-based material (A).

Examples of the particularly preferable carboxylate-containing polymer (C) include a lithium salt of polyacrylic acid and a sodium salt of polyacrylic acid. Use of these carboxylate-containing polymers (C) is preferable because the initial charge/discharge efficiency-enhancing effect caused by enhancement of the ionic conductivity in the electrode mixture layer and the volume expansion reducing-effect in predoping caused by enhancement of the swelling resistance to a solvent including an alkali metal or the alkali earth metal and a linear polyphenylene compound (D) dissolved become likely to develop.

The amount of the lithium ions or sodium ions contained in the carboxylate-containing polymer (C) can be measured by ion chromatography or the like.

The weight average molecular weight of the carboxylate-containing polymer (C) is preferably $5.0 \times 10^3$ or more and $5.0 \times 10^5$ or less. When the weight average molecular weight is less than $5.0 \times 10^3$, the mechanical strength of the negative electrode mixture layer may decrease. When the weight average molecular weight exceeds $5.0 \times 10^5$, it is likely to become difficult to form the negative electrode mixture layer. The weight average molecular weight of the carboxylate-containing polymer (C) may be measured by gel permeation chromatography (GPC).

The negative electrode mixture layer may contain a polymer or a synthetic rubber in addition to the carboxylate-containing polymer (C). Examples of the polymer that may be contained in the negative electrode mixture layer include polyvinylidene fluoride (PVDF), polyimides (PI), polyamideimides (PAI), and polyamides such as aramid. Examples of the synthetic rubber that may be contained in the negative electrode mixture layer include styrene-butadiene rubber (SBR), fluorine rubber (FR), and ethylene propylene diene (EPDM).

(Linear Polyphenylene Compound (D))

The linear polyphenylene compound (D) is a compound that functions as a catalyst when the alloy-based material (A) and carbon material (B) as the negative electrode active material are predoped. The linear polyphenylene compound (D) is introduced into the negative electrode mixture layer in predoping of alkali metals. Thus, inclusion of the linear polyphenylene compound (D) in the negative electrode mixture layer means that the negative electrode has been predoped by immersion in a solution containing alkali metal ions and a catalyst.

The linear polyphenylene compound (D) is a linear compound that contains a structure formed by direct binding of aromatic rings. The structure formed by linearly direct binding of aromatic rings possessed by the linear polyphenylene compound (D) contains preferably two or more and five or less aromatic rings, more preferably two or more and three or less aromatic rings. The aromatic rings described above preferably contain no hetero atom. The linear polyphenylene compound (D), which contains a structure formed by direct binding of two or more aromatic rings, provides associates

with lithium having high activity, increasing the amount of predoping in electrodes. In contrast, when the number of the aromatic rings exceeds five, the associates are stabilized, and the amount of predoping decreases. Examples of the linear polyphenylene compound (D) include biphenyls, o-terphenyl, m-terphenyl, p-terphenyl, and derivatives thereof. Examples of the derivative include compounds obtained by substituting a biphenyl or terphenyl with an alkyl group having 1 or more and 10 or less carbon atoms, such as 4-tert-butyl biphenyl and 4,4'-di-tert-butyl biphenyl, p-methoxy biphenyl.

The amount of the linear polyphenylene compound (D) is, in the case of a single-sided electrode, preferably 0.005 μg or more and 20 μg or less, more preferably 0.005 μg or more and 10 μg or less, still more preferably 0.005 μg or more and 5 μg or less per electrode area ($cm^2$). The amount of the linear polyphenylene compound (D) is, in the case of a double-sided electrode, preferably 0.01 μg or more and 40 μg or less, more preferably 0.01 μg or more and 20 μg or less, still more preferably 0.01 μg or more and 10 μg or less per electrode area ($cm^2$). With a large amount of the linear polyphenylene compound (D) present, the internal resistance of the battery may increase or the initial characteristics and load characteristics may decrease when the negative electrode is used in the non-aqueous electrolyte secondary battery. In contrast, provided that the amount of the linear polyphenylene compound (D) is within the above range, the linear polyphenylene compound (D) is unlikely to affect the characteristics of the battery, and thus, the battery characteristics become likely to be stabilized.

The content of the linear polyphenylene compound (D) can be checked by gas chromatography (GC). Specifically, the content can be checked in accordance with the following procedure.

1) The linear polyphenylene compound (D) in the negative electrode mixture layer is identified by gas chromatography (GC). Then, a plurality of liquid samples of the identified linear polyphenylene compound (D) each having a different concentration of the compound (D) is prepared and subjected to gas chromatography (GC) measurement under measurement conditions described below to obtain a calibration curve.
2) Then, the negative electrode mixture layer to be measured is placed in a vial bottle. 1 mL of an extraction solvent in which the linear polyphenylene compound (D) is soluble is added to the bottle, and the layer is immersed in the solvent for 30 minutes. This vial is set on an ultrasonic cleaner VS-D100 (manufactured by AS ONE Corporation), and the vial is irradiated with a composite frequency of 24 kHz and 31 kHz for three minutes.
3) The obtained extraction solvent is analyzed by gas chromatography (GC) to quantify the linear polyphenylene compound (D) in the extraction solvent by comparison with the calibration curve mentioned above.

Gas chromatography (GC) can be carried out under the following conditions, for example.
Measurement apparatus name: Agilent 7890A/5975C GC/MSD
Column: Agilent J & W HP-5MS length 60 m, inner diameter 0.25 mm, film thickness 0.25 μm
Heating conditions: 40°C (retention: 3 minutes) - temperature rise at 20°C/minute - 300°C (retention: 14 minutes)
Carrier gas: helium
Detector: MSD (mass selective detector)

As the above extraction solvent, there is no limitation as long as the linear polyphenylene compound (D) is soluble in the solvent, and a low boiling point solvent that easily vaporizes is preferred. An example of such an extraction solvent includes acetone.

(Conductive Aid (E))

The negative electrode mixture layer of the negative electrode of the present invention may further include a conductive aid (E). Such a conductive aid (E) is not particularly limited as long as it causes no chemical reaction in a non-aqueous electrolyte secondary battery. Examples of the conductive aid (E) that can be used include materials such as carbon fiber having an aspect ratio of 10 or more, carbon black (such as thermal black, furnace black, channel black, Ketchen black, and acetylene black), metal powder (such as powder of copper, nickel, aluminum, silver), metal fiber, and a polyphenylene derivative.

The conductive aid (E) preferably contains carbon fiber having an aspect ratio of 10 or more and 1,000 or less. The aspect ratio of the carbon fiber is more preferably 10 or more and 500 or less. Combination of such carbon fiber with the carbon particles (B) mentioned above is likely to lead to improvement in the capacity and cycle life when the negative electrode is used in the non-aqueous electrolyte secondary battery.

The method for producing carbon fiber is not particularly limited. For example, there are a method involving spinning a polymer into fiber and heating under an inert atmosphere; and a vapor phase growth method in which an organic compound is reacted at high temperature in the presence of a catalyst. In the carbon fiber obtained by the vapor growth method, the so-called vapor grown carbon fiber, a growth direction of the crystal is roughly in parallel with the fiber axis and, therefore, crystallinity of a graphite structure is likely to become high in a fiber length direction and a carbon fiber having a relatively short fiber diameter, relatively high conductivity, and a relatively high strength is obtained.

In the negative electrode mixture layer, the content of the conductive aid (E) is preferably 0.01mass% or more,

more preferably 0.05mass% or more, still more preferably 0.1mass% or more. The content is usually preferably 20mass% or less, more preferably 10mass% or less.

(Physical Properties of Negative Electrode Mixture Layer)

The thickness of the negative electrode mixture layer is not particularly limited and, for example, is preferably 5 μm or more, more preferably 10 μm or more. The thickness of the negative electrode mixture layer is also preferably 200 μm or less, more preferably 100 μm or less, still more preferably 75 μm or less. With a thickness of the negative electrode mixture layer within the above range, the amount of alkali metals that can be subjected to the absorbing and desorbing function sufficiently increases even upon charging and discharging at a high charge/discharge rate.

The density of the negative electrode mixture layer is preferably 1.1 g/cm$^3$ or more and 1.7 g/cm$^3$ or less, more preferably 1.2 g/cm$^3$ or more and 1.5 g/cm$^3$ or less, still more preferably 1.2 g/cm$^3$ or more and 1.4 g/cm$^3$ or less. With a density of the active material in the negative electrode mixture layer of 1.1 g/cm$^3$ or more, the volume energy density of the battery is likely to sufficiently increase. With a density of 1.6 g/cm$^3$ or less, the cycling characteristics are likely to increase.

Furthermore, when the negative electrode mixture layer is formed on each face of the collector, the amount of the active material (the alloy-based material (A) and carbon particles (B)) contained in a unit area of one side of the negative electrode mixture layer is preferably 2 mg/cm$^2$ or more and 10 mg/cm$^2$ or less, more preferably 3 mg/cm$^2$ or more and 8 mg/cm$^2$ or less.

1-2. Collector

The material of the collector in the negative electrode may be a metal material such as silicon and/or a silicon alloy, tin and a tin alloy, a silicon-copper alloy, copper, nickel, stainless steel, nickel-plated steel; or a carbon material such as carbon cloth and carbon paper.

The shape of the collector of the negative electrode is appropriately selected depending on applications of the non-aqueous electrolyte secondary battery. For example, when the collector is made of a metal material, the collector may be in the form of a foil, column, coil, plate, a thin film or the like. Meanwhile when the collector is made of a carbon material, the collector may be in the form of a plate, thin film, column or the like. The thickness of the collector is not particularly limited, and is usually 5 μm or more and 30 μm or less, preferably 6 μm or more and 20 μm or less. In addition, the surface of the collector may be roughened by chemical treatment or physical treatment, or coated with a conductive material such as carbon black and acetylene black.

2. Method for Producing Negative Electrode for Non-Aqueous Electrolyte Secondary Battery

The method for producing a negative electrode for a non-aqueous electrolyte secondary battery according to one embodiment of the present invention includes forming a negative electrode for a secondary battery having a negative electrode mixture layer on a collector by bringing an active material-containing layer including an alloy-based material (A), a carbon particles (B), and a carboxylate-containing polymer (C) into contact with alkali metals in the presence of a linear polyphenylene compound (D) to predope the alloy-based material (A) and the carbon particles (B) with the alkali metals. The method for producing a negative electrode for a non-aqueous electrolyte secondary battery of the present invention may include forming an active material-containing layer. Furthermore, the method may include removing impurities from the negative electrode for a secondary battery obtained above and the like. Each procedure will be described below.

2-1. Forming Active Material-Containing Layer

An active material-containing layer can be obtained by dispersing the above-described alloy-based material (A), carbon particles (B), carboxylate-containing polymer (C), conductive aid, and the like into a solvent to prepare a negative electrode mixture paste and applying this paste onto a collector. After application of the negative electrode mixture paste, the solvent is removed or the like as required to dry and solidify the negative electrode mixture paste, and then an active material-containing layer can be obtained.

In this case, the content of each component in the negative electrode mixture paste described above is only required to be adjusted in accordance with the content of each component in a negative electrode for a non-aqueous electrolyte secondary battery to be produced. For example, the content of the carboxylate-containing polymer (C) in the negative electrode mixture paste possessed by a negative electrode for a non-aqueous electrolyte secondary battery to be produced can be 4mass% or more and 13mass% or less based on the total mass of the negative electrode mixture paste described above, by setting the content of the carboxylate-containing polymer (C) contained in the negative electrode mixture paste described above at 4mass% or more and 13mass% or less based on the total mass of the components other than the solvent contained in the negative electrode mixture paste. In this case, the content of the

linear polyphenylene compound (D) to be introduced into the negative electrode mixture layer in predoping is not so high based on the total mass of the negative electrode mixture layer and thus may be neglected.

The solvent that can be used for the negative electrode mixture paste is not particularly limited as long as the solvent can homogeneously dissolve or disperse the alloy-based material (A), carbon particles (B), carboxylate-containing polymer (C) and the like, and is preferably an aprotic polar solvent, more preferably an aprotic amide solvent. Examples of the aprotic amide solvent include N,N-dimethylformamide, N,N-dimethylacetamide, N,N-diethylacetamide, N-methyl-2-pyrrolidone, and 1,3-dimethyl-2-imidazolidinone. These solvent may be used singly or two more of these solvents may be combined.

In addition to these solvents, other solvents may coexist as required. Examples of other solvents include benzene, toluene, o-xylene, m-xylene, p-xylene, mesitylene, 1,2,4-trimethylbenzene, o-cresol, m-cresol, p-cresol, o-chlorotoluene, m-chlorotoluene, p-chlorotoluene, o-bromotoluene, m-bromotoluene, p-bromotoluene, chlorobenzene, bromobenzene, methanol, ethanol, n-propanol, isopropyl alcohol, and n-butanol.

The amount of the solvent in the negative electrode mixture paste is appropriately set in consideration of the viscosity of the negative electrode mixture paste and the like. The above amount of the solvent is preferably 50 parts by mass or more and 900 parts by mass or less, more preferably 65 parts by mass or more and 500 parts by mass or less based on 100 parts by mass of the solid content contained in the mixture paste.

The negative electrode mixture paste may be applied by a known method such as screen printing, roll coating, slit coating and the like. In this case, the mixture paste for a negative electrode may be applied in a pattern. For example, a mesh-like active material-containing layer may be formed.

The applied negative electrode mixture paste can be dried by heat curing, for example. Heat curing may be carried out usually under atmospheric pressure, but may be carried out under pressure or under vacuum. The atmosphere for heat drying is not particularly limited. Usually, heat drying is carried out preferably under an atmosphere of air, nitrogen, helium, neon, argon or the like, more preferably under an atmosphere of nitrogen or argon, which is an inert gas. The negative electrode mixture paste can be heated, for example, by heat treatment at 150°C or more and 500°C or less for one minute or more and 24 hours or less.

2-2. Predoping

The active material-containing layer containing at least the alloy-based material (A), carbon particles (B), and carboxylate-containing polymer (C) mentioned above is brought in contact with alkali metals in the presence of the linear polyphenylene compound (D) to predope the active material-containing layer mentioned above with the alkali metals. That is, a negative electrode having a predoped negative electrode mixture layer is obtained. The method including bringing alkali metals into contact with the active material-containing layer described above in the presence of the linear polyphenylene compound (D) is not particularly limited, and the alkali metals and the active material-containing layer are preferably brought into contact with each other by immersing the active material-containing layer in a solution including the alkali metals and the linear polyphenylene compound (D) dissolved. The alkali metals to be dissolved in the solution herein may be any alkali metals that can be absorbed by the alloy-based material (A).

When alkali metals and the linear polyphenylene compound (D) are dissolved in a solvent, electrons transfer from the alkali metals to the linear polyphenylene compound (D), and anions of the linear polyphenylene compound (D), alkali metal ions (e.g., lithium ions or sodium ions) or alkali earth metal ions are formed. When the active material-containing layer mentioned above is immersed in the above solution, electrons transfers from the anions of the linear polyphenylene compound (D) to the active material-containing layer side, and the anions of the linear polyphenylene compound (D) return to the linear polyphenylene compound (D). Meanwhile, the negative electrode active material (alloy-based material (A) and carbon atoms (B)) that has received electrons reacts with the alkali metal ions or alkali earth metal ions to predope the negative electrode active material. At this time, the amount of the linear polyphenylene compound (D) mentioned above is introduced into the negative electrode mixture layer.

The concentration of the alkali metals in the above solution herein is preferably 0.07 g/L or more and the saturating concentration or less from the viewpoint of an increase in the amount of alkali metals to be absorbed by predoping. Meanwhile, the concentration of the linear polyphenylene compound (D) in the above solution is preferably 0.005 mol/L or more and 4.0 mol/L or less, more preferably 0.005 mol/L or more and 1.0 mol/L or less, still more preferably 0.005 mol/L or more and 0.7 mol/L or less. With a concentration of the linear polyphenylene compound (D) of less than 0.005 mol/L, predoping with the alkali metals is likely to require a longer time. In contrast, with a concentration of the linear polyphenylene compound (D) of more than 4.0 mol/L, the linear polyphenylene compound (D) is likely to precipitate in the solution.

The time during which the above solution and the active material-containing layer are in contact with each other is not particularly limited. However, in order to sufficiently predope the negative electrode active material (the alloy-based material (A) and carbon atoms (B)) with alkali metals, the time is preferably 0.5 minutes or more, more preferably 0.5 minutes or more and 240 hours or less, still more preferably 0.5 minutes or more and 72 hours or less, still more preferably

0.5 minutes or more and 24 hours or less, still more preferably 0.5 minutes or more and one hour or less, still more preferably 0.5 minutes or more and 0.5 hours or less.

When the negative electrode is immersed in the solution, the rate of predoping with alkali metals can be increased by allowing the solution to flow by stirring, circulation or the like. At a higher temperature of the solution, the rate of predoping can be increased, but in order to prevent the solution from boiling, the temperature is preferably equal to or less than the boiling point of the solution.

The type of the solvent for dissolving the above alkali metals and the linear polyphenylene compound (D) is not particularly limited as long as the solvent is likely to solvate the alkali metals, and examples thereof may include cyclic carbonate esters, cyclic esters, chain esters, cyclic ethers, chain ethers, and nitriles.

Examples of the cyclic carbonate ester include propylene carbonate, ethylene carbonate, and dimethyl sulfoxide (DMSO). Examples of the cyclic ester include γ-butyrolactone, γ-valerolactone, γ-caprolactone, δ-hexanolactone, and δ-octanolactone. Examples of the chain ester include dimethyl carbonate (DMC), diethyl carbonate, and ethylmethyl carbonate. Examples of the cyclic ether include oxetane, tetrahydrofuran, and tetrahydropyrane. Examples of the chain ether include dimethoxyethane, ethoxymethoxyethane, and diethoxyethane. Examples of the nitriles include acetonitrile, propionitrile, glutaronitrile, methoxyacetonitrile, and 3-methoxypropionitrile. The above solvent also may be hexamethylsulphortriamide, acetone, N-methyl-2-pyrrolidone, dimethylacetamide, pyridine, dimethylformamide, ethanol, formamide, methanol, water or the like. The solvent may include one of these singly or may include two or more of these.

2-3. Removing Impurities from Negative Electrode for Secondary Battery

In this removing, the linear polyphenylene compound (D) is removed from the negative electrode mixture layer possessed by the negative electrode for a secondary battery by immersing the negative electrode for a secondary battery obtained in the predoping mentioned above in a solvent in which the linear polyphenylene compound (D) is soluble. Removing the linear polyphenylene compound (D) by this removing reduces impurities in the negative electrode for a secondary battery to thereby improve the stability of the non-aqueous electrolyte secondary battery. The linear polyphenylene compound (D) is not completely removed from the negative electrode mixture layer, and at least the amount mentioned above remains in the negative electrode mixture layer.

Examples of the solvent in which the linear polyphenylene compound (D) is soluble include the cyclic carbonate esters, cyclic esters, chain esters, cyclic ethers, chain ethers, and nitriles mentioned above. Of these, from the viewpoint of the solubility of lithium, cyclic carbonate esters are preferable, and tetrahydrofuran is more preferable. The time for immersing the negative electrode mixture layer in the solvent described above is not particularly limited. The time is only required to be five seconds or more, and is preferably 10 seconds or more and 10 hours or less. After immersion in the solvent described above, the solvent is sufficiently vaporized to thereby provide a negative electrode for a non-aqueous electrolyte secondary battery. When the negative electrode mixture layer is immersed in a solution, the linear polyphenylene compound (D) becomes likely to be removed by allowing the solution to flow or to microvibrate by ultrasonics or the like, and thus the rate of removing impurities can be increased. An increase in the temperature of the solution also can increase the rate of removing impurities, but in order to prevent the solution from boiling, the temperature of the solvent in heating is preferably equal to or less than the boiling point of the solvent.

3. Non-Aqueous Electrolyte Secondary Battery

The non-aqueous electrolyte secondary battery according to one embodiment of the present invention includes a positive electrode, the negative electrode for a secondary battery mentioned above, and an electrolyte solution. At least any of the above positive electrode, negative electrode, and electrolyte solution contains alkali metals. In the non-aqueous electrolyte secondary battery described above, in which the negative electrode has been predoped, "the total molar amount of alkali metals contained in the negative electrode for a secondary battery at full charge" is larger than "the molar amount of alkali metals to be calculated from the capacity of the positive electrode active material possessed by the positive electrode". "The molar amount of alkali metals to be calculated from the capacity of the positive electrode active material", "the total molar amount of alkali metals contained in the negative electrode for a secondary battery at full charge", and "the amount of alkali metals used for predoping of the negative electrode" can be verified by the following method.

"The total molar amount of alkali metals contained in the negative electrode at full charge" can be identified by an element quantitative analysis method such as ICP emission spectrometry and atomic absorption spectrometry. Incidentally, the total molar amount described above corresponds to the total (A) of "the molar amount of alkali metals contributing to charge/discharge of the positive electrode active material (B)" and "the total molar amount of alkali metals in the negative electrode for a secondary battery (alkali metals used for predoping of negative electrode)".

Meanwhile, "the molar amount of alkali metals to be calculated from the capacity of the positive electrode active material" can be identified by producing a half cell including a positive electrode of a non-aqueous electrolyte secondary

battery and a counter electrode of the alkali metals described above and measuring the discharge capacity of the half cell described above (amount of alkali metals absorbed to the positive electrode). The above value corresponds to the above "the molar amount of alkali metals contributing to charge/discharge of the positive electrode active material (B)", and thus, subtraction of (A) from (B) can identify "the amount of the alkali metals used for predoping of the negative electrode".

Incidentally, in the non-aqueous electrolyte secondary battery of the present invention, the above negative electrode for a secondary battery is preferably predoped with alkali metals of 3mol% or more and 50mol% or less, preferably 7mol% or more and 40mol% or less, still more preferably 10mol% or more and 35mol% or less based on the "the molar amount of alkali metals to be calculated from the capacity of the positive electrode active material possessed by the positive electrode" mentioned above. With a total molar amount of the alkali metals and alkaline earth metals contained in the negative electrode for a secondary battery in the above range, the negative electrode for a secondary battery is stable, a reduction in the doping capacity over time is small, and a non-aqueous electrolyte secondary battery can be assembled in an atmosphere other than an inert atmosphere. When the total molar amount of the alkali metals is less than 3 mol%, the initial charge/discharge efficiency of the battery will not sufficiently increase. The total molar amount of more than 50mol% is not practical because the activity of the negative electrode increases and a battery has to be assembled in an inert atmosphere such as argon.

The negative electrode for a secondary battery has been mentioned above. Then, components other than the negative electrode of the non-aqueous electrolyte secondary battery, that is, the positive electrode, electrolyte solution, and separator will be described below.

3-1. Positive Electrode

The above positive electrode can be appropriately selected depending on the application of a non-aqueous electrolyte secondary battery, and may be a laminate or the like including a sheet collector and positive electrode mixture layers disposed on both the faces of the collector, for example.

(Positive Electrode Mixture Layer)

The positive electrode mixture layer may be a layer to which a positive electrode active material bound with a binding agent for a positive electrode (a binding agent for a positive electrode). The positive electrode active material is not limited as long as the material is a material capable of absorption and desorption of alkali metals that can be absorbed or desorbed by the alloy-based material (A) possessed by the negative electrode for a secondary battery, and it is possible to use a positive electrode active material usually used in non-aqueous electrolyte secondary batteries. Specifically, when the alkali metal is lithium, examples thereof include lithium-manganese composite oxides (such as $LiMn_2O_4$), lithium-nickel composite oxides (such as $LiNiO_2$), lithium-cobalt composite oxides (such as $LiCoO_2$), lithium-iron composite oxides (such as $LiFeO_2$), lithium-nickel-manganese composite oxides (such as $LiNi_{0.5}Mn_{0.5}O_2$), lithium-nickel-cobalt composite oxides (such as $LiNi_{0.8}Co_{0.2}O_2$), lithium-nickel-cobalt-manganese composite oxides, lithium-transition metal phosphate compounds (such as $LiFePO_4$), and lithium-transition metal sulfate compounds ($Li_xFe_2(SO_4)_3$).

The alkali metals that can be absorbed and desorbed by the above alloy-based material (A), the alkali metals for predoping in the predoping described above, and the alkali metals that can be absorbed and desorbed by the above positive electrode active material are preferably the same elements.

Only one of or two or more of these positive electrode active material may be contained in the positive electrode mixture layer. The content of the positive electrode active material in the positive electrode mixture layer is only required to be 10mass% or more, and is preferably 30mass% or more, more preferably 50mass% or more. Additionally, the content of the positive electrode active material in the positive electrode mixture layer is only required to be 99.9mass% or less, and is preferably 99mass% or less.

Meanwhile, the binding agent for a positive electrode for binding the positive electrode active material may be a binding agent such as the binding agent for a positive electrode contained in the above negative electrode mixture layer (the carboxylate-containing polymer (C)), and also may be other known binding agent resins for a positive electrode. Examples of the known binding agent resin for a positive electrode include inorganic compounds such as silicate and water glass, and polymers having no unsaturated bond such as Teflon (R), polyvinylidene fluoride, and polyimides. The lower limit of the weight average molecular weight of these polymers is only required to be $1.0 \times 10^4$ and is preferably $1.0 \times 10^5$. The upper limit of the weight average molecular weight of these polymers is only required to be $3.0 \times 10^6$ and is preferably $1.0 \times 10^6$.

The positive electrode mixture layer may contain a conductive aid in order to improve the electrical conductivity of the electrode. The conductive aid is not particularly limited as long as it can impart electrical conductivity, and examples thereof can be carbon powder such as acetylene black, carbon black, and graphite, various metal fibers, powders, and

foils.

The thickness of the positive electrode mixture layer is only required to be 10 μm or more and 200 μm or less. The density of the positive electrode mixture layer (calculated from the mass of the positive electrode mixture layer laminated on the collector per unit area and the thickness thereof) is preferably 3.0 g/cm$^3$ or more and 4.5 g/cm$^3$ or less.

(Positive Electrode collector)

As the collector in the positive electrode, a metal material such as aluminum, stainless steel, nickel plating, titanium, and tantalum, and a carbon material such as carbon cloth and carbon paper can be usually used. Of these, the metal material is preferred, and aluminum is particularly preferred. The collector may be in the form of a foil, column, coil, plate, or thin film, when the collector is made of a metal material. The above collector may be in a mesh form or the like and may be made of expanded metal, punched metal, foamed metal or the like. Meanwhile, when the collector is made of a carbon material, the collector can be in the form of a plate, thin film, column or the like. Of these, metal thin films, which are now used in industrial products, are preferred.

When the positive electrode collector is a thin film, the film may have any thickness. The thickness described above may be 1 μm or more, and is preferably 3 μm or more, more preferably 5 μm or more. The thickness is only required to be 100 mm or less, and is preferably 1 mm or less, more preferably 50 μm or less. If the thickness of the positive electrode collector as a thin film is smaller than that within the above range, the strength necessary as the collector may become insufficient. In contrast, if the thickness of the positive electrode collector as a thin film is larger than that within the above range, the ease of handling may deteriorate.

(Method for Forming Positive Electrode)

The above-mentioned positive electrode can be obtained by dispersing the positive electrode active material and binding agent for a positive electrode mentioned above or a precursor thereof, a conductive aid and the like into a solvent to prepare a positive electrode mixture paste and applying this paste onto a collector. After application of the positive electrode mixture paste, the solvent is removed and the precursor of the binding agent for a positive electrode is allowed to react as required to dry and solidify the positive electrode mixture paste. The method for applying or the method for solidifying the positive electrode mixture paste or the like may be the same as those in the method for forming the negative electrode.

3-2. Electrolyte Solution

The electrolyte solution of the non-aqueous electrolyte secondary battery of the present invention may be a non-aqueous electrolyte solution prepared by dissolving a salt of the alkali metals described above in a non-aqueous solvent. This non-aqueous electrolyte solution may also be a gel form, rubber form, solid sheet form or the like, which is prepared by adding an organic polymer compound and the like to the solution.

The non-aqueous electrolyte solution contains a salt of the alkali metals and a non-aqueous solvent. The salt of the alkali metals can be appropriately selected from known salts of alkali metals. When the alkali metal is lithium, examples thereof can be halides such as LiCl and LiBr, perhalogen acid salts such $LiBrO_4$ and $LiClO_4$, inorganic fluorides such as $LiPF_6$, $LiBF_4$, and $LiAsF_6$, inorganic lithium salts such as lithium bis(oxalatoborate) $LiBC_4O_8$, and fluorine-containing organic lithium salts including perfluoroalkane sulfonate salts such as $LiCF_3SO_3$ and $LiC_4F_9SO_3$ and perfluoroalkane sulfonate imide salts such as Li trifluorosulfone imide ($(CF_3SO_2)_2NLi$). The electrolyte solution may contain one of the salts of the alkali metals singly or may include two or more of these. The concentration of the salt of the alkali metals in the non-aqueous electrolyte solution can be 0.5 M or more and 2.0 M or less.

Examples of the non-aqueous solvent include cyclic carbonates such as ethylene carbonate (EC), propylene carbonate (PC), butylene carbonate (BC), and vinylene carbonate (VC), chain carbonates such as dimethyl carbonate (DMC), diethyl carbonate (DEC), ethylmethyl carbonate (EMC), and dipropyl carbonate (DPC), aliphatic carboxylate esters such as methyl formate, methyl acetate, methyl propionate, and ethyl propionate, γ-lactones such as γ-butyrolactone, chain ethers such as 1,2-dimethoxyethane (DME), 1,2-diethoxyethane (DEE), and ethoxymethoxyethane (EME), cyclic ethers such as tetrahydrofuran and 2-methyltetrahydrofuran, and aprotoic organic solvents such as dimethyl sulfoxide, 1,3-dioxolane, formamide, acetamide, dimethylformamide, dioxolane, acetonitrile, propylnitrile, nitromethane, ethylmonoglyme, phosphate triester, trimethoxymethane, dioxolane derivatives, sulfolane, methylsulfolane, 1,3-dimethyl-2-imidazolidinone, 3-methyl-2-oxazolidinone, propylene carbonate derivatives, tetrahydrofuran derivatives, ethyl ether, 1,3-propanesultone, anisole, dimethyl sulfoxide, N-methylpyrrolidone, butyldiglyme, and methyltetraglyme. The electrolyte solution may include one of these singly or may include two or more of these.

The specific examples of the organic polymer compound for preparing an electrolyte solution in a gel form, rubber form, or solid sheet form include polyether polymer compounds such as polyethylene oxide and polypropylene

oxide; crosslinked polymers of polyether polymer compounds; vinyl alcohol polymer compounds such as polyvinyl alcohol and polyvinyl butyral; insolubilized products of a vinyl alcohol polymer compound; polyepichlorohydrin; polyphosphazene; polysiloxane; vinyl polymer compounds such as polyvinylpyrrolidone, polyvinylidene carbonate, and polyacrylonitrile; polymeric copolymers such as poly(ω-methoxyoligooxyethylene methacrylate), poly(ω-methoxyoligooxyethylene methacrylate-co-methyl methacrylate), and poly(hexafluoropropylene-vinylidene fluoride).

The electrolyte solution may further include a film former. Specific examples of the film former include carbonate compounds such as vinylene carbonate, vinylethylene carbonate, vinylethyl carbonate, and methylphenyl carbonate, fluorine-based carbonate compounds such as fluoroethylene carbonate, difluoroethylene carbonate, trifluoromethylethylene carbonate, bis(trifluoromethyl)ethylene carbonate, 1-fluoroethylmethyl carbonate, ethyl 1-fluoroethyl carbonate, fluoromethylmethyl carbonate, bis(1-fluoroethyl) carbonate, bis(fluoromethyl) carbonate, ethyl 2-fluoroethyl carbonate, bis(2-fluoroethyl) carbonate, methyl 1,1,1-trifluoropropan-2-yl carbonate, ethyl 1,1,1-trifluoropropan-2-yl carbonate, methyl 2,2,2-trifluoroethyl carbonate, bis(1,1,1-trifluoropropan-2-yl) carbonate, bis(2,2,2-trifluoroethyl) carbonate, ethyl 3,3,3-trifluoropropyl carbonate, and bis(3,3,3-trifluoropropyl) carbonate, alkene sulfides such as ethylene sulfide and propylene sulfide; sultone compounds such as 1,3-propanesultone and 1,4-butanesultone; and acid anhydride such as maleic anhydride and succinic anhydride.

When the electrolyte solution includes a film former, the content thereof is only required to be 30mass% or less and is preferably 15mass% or less, still more preferably 10mass% or less, particularly preferably 2mass% or less, based on the total amount (mass) of the constituents of the electrolyte solution. An excessively high content of the film former may cause adverse effects on other battery characteristics, such as an increase in the initial irreversible capacity and a reduction in low temperature characteristics or rate characteristics of the non-aqueous electrolyte secondary battery.

3-3. Separator

Between the positive electrode and the negative electrode for a secondary battery, a separator may be included. When a separator is included, a short circuit between the electrodes can be prevented. The separator can be a porous member such as a porous film or non-woven fabric. The porosity of the separator is appropriately set depending on the electron or ion permeability, the material of the separator or the like and is preferably 30% or more and 80% or less.

Examples of the separator include microporous films, glass fiber sheets, non-woven fabric, woven fabric and the like having excellent ion permeability. From the viewpoint of improving the organic solvent resistance and hydrophobicity, preferable examples of the material of the separator include polypropylene, polyethylene, polyphenylene sulfide, polyethylene terephthalate, polyethylene naphthalate, polymethylpentene, polyamides, and polyimides. The separator may be formed of one of these singly or may be formed of two or more of these.

Inexpensive polypropylene can be used in the separator. When reflow resistance is required from the non-aqueous electrolyte secondary battery, polypropylene sulfide, polyethylene terephthalate, polyamides, polyimides, and the like having a thermal deformation temperature of 230°C or more are preferable for the separator. The separator can have a thickness of 10 μm or more and 300 μm or less.

3-4. Form of Non-Aqueous Electrolyte Secondary Battery

The form of the non-aqueous electrolyte secondary battery is not particularly limited. Examples of the form of the non-aqueous electrolyte secondary battery include cylinder types in which sheet electrodes and the separator are provided in a spiral, cylinder types having an inside-out structure in which pellet electrodes and the separator are combined, and coin types in which pellet electrodes and the separator are laminated. Further, by housing the battery in such a form in any outer case, the battery may be in any form such as a coin type, a cylinder type, a square type, and a pouch type.

3-5. Method for Producing Non-Aqueous Electrolyte Secondary Battery

The non-aqueous electrolyte secondary battery can be produced by assembling the negative electrode for a secondary battery with a positive electrode and the like in an appropriate procedure depending on the structure of the battery. By way of example, the negative electrode for a secondary battery is placed on an outer case, and an electrolyte solution and a separator are provided thereon. Further, a positive electrode is placed thereon so as to oppose to the negative electrode, and these are swaged along with a gasket and a sealing plate to thereby enable a battery to be produced.

Examples

The present invention will be described below more specifically with reference to Examples, but the scope of

the present invention is not limited to the description of Examples.

Abbreviations used in the present Examples and Comparative Examples are shown below.

PAAH: polyacrylic acid not neutralized
PAALi: polyacrylic acid neutralized with Li
PAANa: polyacrylic acid neutralized with Na
SBR: styrene-butadiene rubber
CMC: carboxymethyl cellulose sodium salt
THF: tetrahydrofuran
BP: biphenyl
NAP: naphthalene
oTP: o-terphenyl
DtBBP: 4,4'-di-tert-butyl-2,2'-biphenyl

Methods for measuring various physical properties in the present Examples and Comparative Examples are as follows.

(Solid Content Concentration of Carboxylate-Containing Polymer (C))

A carboxylate-containing polymer (C) (its mass is designated as $w_1$) was heat-treated in a hot-air dryer at 150°C for 60 minutes, and the mass after heat treatment (the mass is designated as $w_2$) was measured. The solid content concentration (mass%) was calculated by the following equation.

$$\text{Solid content concentration (mass\%)} = (w_2 / w_1) \times 100$$

(Solid Content Concentration of Linear Polyphenylene Compound (D))

The solid content concentration of a linear polyphenylene compound (D) was measured by gas chromatography (GC). Specifically, the concentration can be measured in accordance with the following procedure.

1) A plurality of liquid samples of the linear polyphenylene compound (D) having a different concentration each used for a negative electrode was prepared and subjected to gas chromatography (GC) measurement under measurement conditions described below to obtain a calibration curve.
2) Then, a unit area of the negative electrode mixture layer to be measured was placed in a vial bottle. Thereto, 1 mL of an extraction solvent in which the linear polyphenylene compound (D) was soluble was added, and the layer was immersed for 30 minutes. This vial was set on an ultrasonic cleaner VS-D100 (manufactured by AS ONE Corporation), and the vial was irradiated with a composite frequency of 24 kHz and 31 kHz for three minutes.
3) The obtained extraction solvent was analyzed by gas chromatography (GC) to quantify the linear polyphenylene compound (D) in the extraction solvent by comparison with the calibration curve mentioned above.
Gas chromatography (GC) was carried out under the following conditions, for example.
Measurement apparatus name: Agilent 7890A/5975C GC/MSD
Column: Agilent J & W HP-5MS length 60 m, inner diameter 0.25 mm, film thickness 0.25 μm
Heating conditions: 40°C (retention: 3 minutes) - temperature rise at 20°C/minute - 300°C (retention: 14 minutes)
Carrier gas: helium
Detector: MSD (mass selective detector)
4) The amount of the linear polyphenylene compound (D) thus quantified was divided by the mass of the negative electrode active material per unit area described above to determine the solid content concentration of the linear polyphenylene compound (D) per unit area.

(Negative Electrode Capacity, Initial Charge/Discharge Efficiency)

The negative electrode capacity and the initial charge/discharge efficiency were evaluated using a coin cell. A negative electrode having a diameter of 14.5 mm produced in each of Examples and Comparative Examples and a positive electrode having a diameter of 15 mm made of lithium foil were used as electrodes. The electrolyte solution used was a solution of $LiPF_6$ dissolved at a concentration of 1 mol/l in a mixed solvent of ethylene carbonate and diethyl carbonate (mixed at a volume ratio 1:1). The separator used was a polypropylene porous film having a diameter of 16

mm and a film thickness of 25 μm.

These cells were, after left to stand at 25°C for 24 hours, and then charged under a constant current at a measurement temperature of 25°C and at 0.05 C to 3 V. First, the coin cell was left to stand for 10 minutes and then discharged under a constant current to 0.005 V. Thereafter, the coin cell was discharged under a constant current to 0.01 C. Next, the coin cell after the discharging was left to stand for 10 minutes and then charged under a constant current at 0.05C in the CC mode to 1.2 V. The discharge capacity during the charging/discharging was taken as the capacity during lithium intercalation in the negative electrode, and the charge capacity obtained by the charging after the discharging was taken as the capacity during lithium deintercalation. The initial charge/discharge efficiency was calculated by the following expression.

Initial charge/discharge efficiency (%) = capacity during lithium deintercalation/capacity during lithium intercalation * 100

(Rate of Increase in Weight of Mixture Layer)

The electrode weight was weighed before and after lithium predoping, and the rate of increase in the weight of the mixture layer due to lithium predoping was calculated by the following expression.

Rate of increase in the weight of the mixture layer due to lithium predoping = ((electrode weight after lithium predoping − collector weight) − (electrode weight before lithium predoping − collector weight))/(electrode weight before lithium predoping − collector weight) * 100

(Rate of Increase in Thickness of Mixture Layer)

The electrode thickness was measured before and after lithium predoping, and the rate of increase in the thickness of the mixture layer due to lithium predoping was calculated by the following expression.

Rate of increase in the thickness of the mixture layer due to lithium predoping = ((electrode thickness after lithium predoping − collector thickness) − (electrode thickness before lithium predoping − collector thickness))/(electrode thickness before lithium predoping − collector thickness) * 100

[Example 1]

<Preparation of Carboxylate-Containing Polymer (C)>

To 29.5 parts by mass (solid content: 0.1 mol) of a 25% aqueous solution of polyacrylic acid (manufactured by Wako Pure Chemical Industries, Ltd., molecular weight: about 150,000), 93.6 parts by mass (solid content: 0.09 mol) of a 1 mol/L sodium hydroxide aqueous solution was added dropwise under stirring to obtain a sodium polyacrylate aqueous solution having a degree of neutralization of 90%. The solid content concentration of this aqueous solution was 8.2%.

<Preparation of Negative Electrode>

Kneaded were 12.2 parts by mass (solid content: 1 parts by mass) of the sodium polyacrylate aqueous solution having a degree of neutralization of 90%, prepared by the method mentioned above and 0.6 parts by mass of acetylene

black as a conductive aid (manufactured by Denka Company Limited, HS-100) using a compound stirrer for batteries (T.K. HIVIS MIX model 2P-03 manufactured by PRIMIX Corporation). To the paste obtained, 18.4 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. $H_2O$ was added thereto, and the mixture was further kneaded to prepare a negative electrode mixture paste. The volume ratio between the silicon oxide and the carbon particles, as the active material, was 20:80.

This negative electrode mixture paste was applied onto Cu foil (thickness: 18 μm) as a collector using an applicator and heat-treated to be cured under a nitrogen atmosphere at 150°C for five minutes. Thereby, there was obtained a negative electrode in which the collector and the negative electrode mixture layer were laminated. The mass of the active material in the negative electrode mixture layer after drying was 4 $mg/cm^2$ (unit area).

<Lithium Predoping to Negative Electrode>

(Preparation of Solution Including Lithium and Linear Polyphenylene Dissolved (Dope Solution))

Under an atmosphere of argon, to 17.7 parts by mass of THF (manufactured by Wako Pure Chemical Industries, Ltd., deoxidation grade), 1.5 parts by mass of BP and 0.15 parts by mass of metal lithium (manufactured by Honjo Metal Co., Ltd.) was added, and the mixture was stirred at 25°C for two hours to prepare a lithium dope solution.

(Step of Lithium Predoping to Negative Electrode)

The negative electrode produced by the above method was immersed in the solution at 25°C for fifteen minutes to predope this negative electrode with lithium. After the negative electrode was taken out from the dope solution, the negative electrode was immersed in THF for one minute in order to remove the dope solution deposited to the negative electrode. Thereafter, the negative electrode was dried in vacuum at 25°C for five minutes to obtain a doped negative electrode.

The doped negative electrode prepared by the method mentioned above was used to prepare a coin cell. The initial charge/discharge efficiency was calculated and the rate of increase in the weight and the rate of increase in the thickness of the mixture layer were calculated in accordance with the methods mentioned above. The results are shown in Table 1.

[Example 2]

<Preparation of Negative Electrode>

Kneaded were 24.3 parts by mass (solid content: 2 parts by mass) of the sodium polyacrylate aqueous solution having a degree of neutralization of 90%, prepared in Example 1, and 0.6 parts by mass of acetylene black as a conductive aid (manufactured by Denka Company Limited, HS-100) using a compound stirrer for batteries (T.K. HIVIS MIX model 2P-03 manufactured by PRIMIX Corporation). To the paste obtained, 17.4 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. $H_2O$ was added thereto, and the mixture was further kneaded to prepare a negative electrode mixture paste. The volume ratio between the silicon oxide and the carbon particles, as the active material, was 20:80.

This negative electrode mixture paste was applied onto Cu foil (thickness: 18 μm) as a collector using an applicator and heat-treated to be cured under a nitrogen atmosphere at 150°C for five minutes. Thereby, there was obtained a negative electrode in which the collector and the negative electrode mixture layer were laminated. The mass of the active material in the negative electrode mixture layer after drying was 4 $mg/cm^2$ (unit area).

The negative electrode was predoped with lithium in the same manner as in Example 1. The doped negative electrode prepared by the method mentioned above was used to prepare a coin cell. The initial charge/discharge efficiency was calculated and the rate of increase in the weight and the rate of increase in the thickness of the mixture layer were calculated in accordance with the methods mentioned above. The results are shown in Table 1.

[Example 3]

<Preparation of Carboxylate-Containing Polymer (C)>

To 29.5 parts by mass (solid content: 0.1 mol) of a 25% aqueous solution of polyacrylic acid (manufactured by Wako Pure Chemical Industries, Ltd., molecular weight: about 150,000), 92.2 parts by mass (solid content: 0.09 mol)

of a 1 mol/L lithium hydroxide aqueous solution was added dropwise under stirring to obtain a lithium polyacrylate aqueous solution having a degree of neutralization of 90%. The solid content concentration of this aqueous solution was 7.1%.

<Preparation of Negative Electrode>

Kneaded were 14.1 parts by mass (solid content: 1 parts by mass) of a lithium polyacrylate aqueous solution having a degree of neutralization of 90%, prepared by the method mentioned above and 0.6 parts by mass of acetylene black as a conductive aid (manufactured by Denka Company Limited, HS-100) using a compound stirrer for batteries (T.K. HIVIS MIX model 2P-03 manufactured by PRIMIX Corporation). To the paste obtained, 18.4 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. $H_2O$ was added thereto, and the mixture was further kneaded to prepare a negative electrode mixture paste. The volume ratio between the silicon oxide and the carbon particles, as the active material, was 20:80.

This negative electrode mixture paste was applied onto Cu foil (thickness: 18 μm) as a collector using an applicator and heat-treated to be cured under a nitrogen atmosphere at 150°C for five minutes. Thereby, there was obtained a negative electrode in which the collector and the negative electrode mixture layer were laminated. The mass of the active material in the negative electrode mixture layer after drying was 4 mg/cm$^2$ (unit area).

The negative electrode was predoped with lithium in the same manner as in Example 1. The doped negative electrode prepared by the method mentioned above was used to prepare a coin cell. The initial charge/discharge efficiency was calculated and the rate of increase in the weight and the rate of increase in the thickness of the mixture layer were calculated in accordance with the methods mentioned above. The results are shown in Table 1.

[Example 4]

<Preparation of Negative Electrode>

Kneaded were 19.7 parts by mass (solid content: 1.4 parts by mass) of the lithium polyacrylate aqueous solution having a degree of neutralization of 90%, prepared in Example 3, and 0.6 parts by mass of acetylene black as a conductive aid (manufactured by Denka Company Limited, HS-100) using a compound stirrer for batteries (T.K. HIVIS MIX model 2P-03 manufactured by PRIMIX Corporation). To the paste obtained, 18 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. $H_2O$ was added thereto, and the mixture was further kneaded to prepare a negative electrode mixture paste. The volume ratio between the silicon oxide and the carbon particles, as the active material, was 20:80.

This negative electrode mixture paste was applied onto Cu foil (thickness: 18 μm) as a collector using an applicator and heat-treated to be cured under a nitrogen atmosphere at 150°C for five minutes. Thereby, there was obtained a negative electrode in which the collector and the negative electrode mixture layer were laminated. The mass of the active material in the negative electrode mixture layer after drying was 4 mg/cm$^2$ (unit area).

The negative electrode was predoped with lithium in the same manner as in Example 1. The doped negative electrode prepared by the method mentioned above was used to prepare a coin cell. The initial charge/discharge efficiency was calculated and the rate of increase in the weight and the rate of increase in the thickness of the mixture layer were calculated in accordance with the methods mentioned above. The results are shown in Table 1.

[Example 5]

<Preparation of Negative Electrode>

Kneaded were 28.2 parts by mass (solid content: 2 parts by mass) of the lithium polyacrylate aqueous solution having a degree of neutralization of 90%, prepared in Example 3, and 0.6 parts by mass of acetylene black as a conductive aid (manufactured by Denka Company Limited, HS-100) using a compound stirrer for batteries (T.K. HIVIS MIX model 2P-03 manufactured by PRIMIX Corporation). To the paste obtained, 17.4 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. $H_2O$ was added thereto, and the mixture was further kneaded to prepare a negative electrode mixture paste. The volume ratio between the silicon oxide and the carbon particles, as the active material, was 20:80.

This negative electrode mixture paste was applied onto Cu foil (thickness: 18 μm) as a collector using an applicator and heat-treated to be cured under a nitrogen atmosphere at 150°C for five minutes. Thereby, there was

obtained a negative electrode in which the collector and the negative electrode mixture layer were laminated. The mass of the active material in the negative electrode mixture layer after drying was 4 mg/cm$^2$ (unit area).

The negative electrode was predoped with lithium in the same manner as in Example 1. The doped negative electrode prepared by the method mentioned above was used to prepare a coin cell. The initial charge/discharge efficiency was calculated and the rate of increase in the weight and the rate of increase in the thickness of the mixture layer were calculated in accordance with the methods mentioned above. The results are shown in Table 1.

[Example 6]

<Preparation of Carboxylate-Containing Polymer (C)>

To 29.5 parts by mass (solid content: 0.1 mol) of a 25% aqueous solution of polyacrylic acid (manufactured by Wako Pure Chemical Industries, Ltd., molecular weight: about 150,000), 87 parts by mass (solid content: 0.085 mol) of a 1 mol/L lithium hydroxide aqueous solution was added dropwise under stirring to obtain a lithium polyacrylate aqueous solution having a degree of neutralization of 85%. The solid content concentration of this aqueous solution was 7.3%.

<Preparation of Negative Electrode>

Kneaded were 19.3 parts by mass (solid content: 1.4 parts by mass) of a lithium polyacrylate aqueous solution having a degree of neutralization of 85%, prepared by the method mentioned above and 0.6 parts by mass of acetylene black as a conductive aid (manufactured by Denka Company Limited, HS-100) using a compound stirrer for batteries (T.K. HIVIS MIX model 2P-03 manufactured by PRIMIX Corporation). To the paste obtained, 18 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. $H_2O$ was added thereto, and the mixture was further kneaded to prepare a negative electrode mixture paste. The volume ratio between the silicon oxide and the carbon particles, as the active material, was 20:80.

This negative electrode mixture paste was applied onto Cu foil (thickness: 18 μm) as a collector using an applicator and heat-treated to be cured under a nitrogen atmosphere at 150°C for five minutes. Thereby, there was obtained a negative electrode in which the collector and the negative electrode mixture layer were laminated. The mass of the active material in the negative electrode mixture layer after drying was 4 mg/cm$^2$ (unit area).

The negative electrode was predoped with lithium in the same manner as in Example 1. The doped negative electrode prepared by the method mentioned above was used to prepare a coin cell. The initial charge/discharge efficiency was calculated and the rate of increase in the weight and the rate of increase in the thickness of the mixture layer were calculated in accordance with the methods mentioned above. The results are shown in Table 1.

[Example 7]

<Preparation of Negative Electrode>

Kneaded were 27.5 parts by mass (solid content: 2 parts by mass) of the lithium polyacrylate aqueous solution having a degree of neutralization of 85%, prepared in Example 6, and 0.6 parts by mass of acetylene black as a conductive aid (manufactured by Denka Company Limited, HS-100) using a compound stirrer for batteries (T.K. HIVIS MIX model 2P-03 manufactured by PRIMIX Corporation). To the paste obtained, 17.4 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. $H_2O$ was added thereto, and the mixture was further kneaded to prepare a negative electrode mixture paste. The volume ratio between the silicon oxide and the carbon particles, as the active material, was 20:80.

This negative electrode mixture paste was applied onto Cu foil (thickness: 18 μm) as a collector using an applicator and heat-treated to be cured under a nitrogen atmosphere at 150°C for five minutes. Thereby, there was obtained a negative electrode in which the collector and the negative electrode mixture layer were laminated. The mass of the active material in the negative electrode mixture layer after drying was 4 mg/cm$^2$ (unit area).

The negative electrode was predoped with lithium in the same manner as in Example 1. The doped negative electrode prepared by the method mentioned above was used to prepare a coin cell. The initial charge/discharge efficiency was calculated and the rate of increase in the weight and the rate of increase in the thickness of the mixture layer were calculated in accordance with the methods mentioned above. The results are shown in Table 1.

[Example 8]

<Preparation of Carboxylate-Containing Polymer (C)>

To 29.5 parts by mass (solid content: 0.1 mol) of a 25% aqueous solution of polyacrylic acid (manufactured by Wako Pure Chemical Industries, Ltd., molecular weight: about 150,000), 71.7 parts by mass (solid content: 0.07 mol) of a 1 mol/L lithium hydroxide aqueous solution was added dropwise under stirring to obtain a lithium polyacrylate aqueous solution having a degree of neutralization of 70%. The solid content concentration of this aqueous solution was 7.4%.

<Preparation of Negative Electrode>

Kneaded were 27.2 parts by mass (solid content: 2 parts by mass) of the lithium polyacrylate aqueous solution having a degree of neutralization of 70%, prepared by the method mentioned above and 0.6 parts by mass of acetylene black as a conductive aid (manufactured by Denka Company Limited, HS-100) using a compound stirrer for batteries (T.K. HIVIS MIX model 2P-03 manufactured by PRIMIX Corporation). To the paste obtained, 17.4 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. $H_2O$ was added thereto, and the mixture was further kneaded to prepare a negative electrode mixture paste. The volume ratio between the silicon oxide and the carbon particles, as the active material, was 20:80.

This negative electrode mixture paste was applied onto Cu foil (thickness: 18 $\mu$m) as a collector using an applicator and heat-treated to be cured under a nitrogen atmosphere at 150°C for five minutes. Thereby, there was obtained a negative electrode in which the collector and the negative electrode mixture layer were laminated. The mass of the active material in the negative electrode mixture layer after drying was 4 mg/cm$^2$ (unit area).

The negative electrode was predoped with lithium in the same manner as in Example 1. The doped negative electrode prepared by the method mentioned above was used to prepare a coin cell. The initial charge/discharge efficiency was calculated and the rate of increase in the weight and the rate of increase in the thickness of the mixture layer were calculated in accordance with the methods mentioned above. The results are shown in Table 1.

[Example 9]

<Preparation of Carboxylate-Containing Polymer (C)>

To 29.5 parts by mass (solid content: 0.1 mol) of a 25% aqueous solution of polyacrylic acid (manufactured by Wako Pure Chemical Industries, Ltd., molecular weight: about 150,000), 52 parts by mass (solid content: 0.05 mol) of a 1 mol/L sodium hydroxide aqueous solution was added dropwise under stirring to obtain a sodium polyacrylate aqueous solution having a degree of neutralization of 50%. The solid content concentration of this aqueous solution was 10.9%.

<Preparation of Negative Electrode>

Kneaded were 18.3 parts by mass (solid content: 2 parts by mass) of the lithium polyacrylate aqueous solution having a degree of neutralization of 50%, prepared by the method mentioned above, and 0.6 parts by mass of acetylene black as a conductive aid (manufactured by Denka Company Limited, HS-100) using a compound stirrer for batteries (T.K. HIVIS MIX model 2P-03 manufactured by PRIMIX Corporation). To the paste obtained, 17.4 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. $H_2O$ was added thereto, and the mixture was further kneaded to prepare a negative electrode mixture paste. The volume ratio between the silicon oxide and the carbon particles, as the active material, was 20:80.

This negative electrode mixture paste was applied onto Cu foil (thickness: 18 $\mu$m) as a collector using an applicator and heat-treated to be cured under a nitrogen atmosphere at 150°C for five minutes. Thereby, there was obtained a negative electrode in which the collector and the negative electrode mixture layer were laminated. The mass of the active material in the negative electrode mixture layer after drying was 4 mg/cm$^2$ (unit area).

The negative electrode was predoped with lithium in the same manner as in Example 1. The doped negative electrode prepared by the method mentioned above was used to prepare a coin cell. The initial charge/discharge efficiency was calculated and the rate of increase in the weight and the rate of increase in the thickness of the mixture layer were calculated in accordance with the methods mentioned above. The results are shown in Table 1.

[Example 10]

<Preparation of Negative Electrode>

Kneaded were 24.3 parts by mass (solid content: 2 parts by mass) of the sodium polyacrylate aqueous solution having a degree of neutralization of 90%, prepared in Example 1, and 0.6 parts by mass of acetylene black as a conductive aid (manufactured by Denka Company Limited, HS-100) using a compound stirrer for batteries (T.K. HIVIS MIX model 2P-03 manufactured by PRIMIX Corporation). To the paste obtained, 17.4 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. $H_2O$ was added thereto, and the mixture was further kneaded to prepare a negative electrode mixture paste. The volume ratio between the silicon oxide and the carbon particles, as the active material, was 20:80.

This negative electrode mixture paste was applied onto Cu foil (thickness: 18 μm) as a collector using an applicator and heat-treated to be cured under a nitrogen atmosphere at 150°C for five minutes. Thereby, there was obtained a negative electrode in which the collector and the negative electrode mixture layer were laminated. The mass of the active material in the negative electrode mixture layer after drying was 4 mg/cm$^2$ (unit area).

<Lithium Predoping to Negative Electrode>

(Preparation of Solution Including Lithium and Linear Polyphenylene Dissolved (Dope Solution))

Under an atmosphere of argon, to 17.7 parts by mass of THF (manufactured by Wako Pure Chemical Industries, Ltd., deoxidation grade), 0.92 parts by mass of oTP and 0.067 parts by mass of metal lithium (manufactured by Honjo Metal Co., Ltd.) was added, and the mixture was stirred at 25°C for two hours to prepare a lithium dope solution.

(Step of Lithium Predoping to Negative Electrode)

The negative electrode produced by the above method was immersed in the solution at 25°C for fifteen minutes to predope this negative electrode with lithium. After the negative electrode was taken out from the dope solution, the negative electrode was immersed in THF for one minute in order to remove the dope solution deposited to the negative electrode. Thereafter, the negative electrode was dried in vacuum at 25°C for five minutes to obtain a doped negative electrode.

The doped negative electrode prepared by the method mentioned above was used to prepare a coin cell. The initial charge/discharge efficiency was calculated and the rate of increase in the weight and the rate of increase in the thickness of the mixture layer were calculated in accordance with the methods mentioned above. The results are shown in Table 1.

[Example 11]

<Preparation of Negative Electrode>

Kneaded were 24.3 parts by mass (solid content: 2 parts by mass) of the sodium polyacrylate aqueous solution having a degree of neutralization of 90%, prepared in Example 1, and 0.6 parts by mass of acetylene black as a conductive aid (manufactured by Denka Company Limited, HS-100) using a compound stirrer for batteries (T.K. HIVIS MIX model 2P-03 manufactured by PRIMIX Corporation). To the paste obtained, 17.4 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. $H_2O$ was added thereto, and the mixture was further kneaded to prepare a negative electrode mixture paste. The volume ratio between the silicon oxide and the carbon particles, as the active material, was 20:80.

This negative electrode mixture paste was applied onto Cu foil (thickness: 18 μm) as a collector using an applicator and heat-treated to be cured under a nitrogen atmosphere at 150°C for five minutes. Thereby, there was obtained a negative electrode in which the collector and the negative electrode mixture layer were laminated. The mass of the active material in the negative electrode mixture layer after drying was 4 mg/cm$^2$ (unit area).

<Lithium Predoping to Negative Electrode>

(Preparation of Solution Including Lithium and Linear Polyphenylene Dissolved (Dope Solution))

Under an atmosphere of argon, to 17.7 parts by mass of THF (manufactured by Wako Pure Chemical Industries, Ltd., deoxidation grade), 1.1 parts by mass of DtBBP and 0.067 parts by mass of metal lithium (manufactured by Honjo Metal Co., Ltd.) were added, and the mixture was stirred at 25°C for two hours to prepare a lithium dope solution.

(Step of Lithium Predoping to Negative Electrode)

The negative electrode produced by the above method was immersed in the solution at 25°C for fifteen minutes to predope this negative electrode with lithium. After the negative electrode was taken out from the dope solution, the negative electrode was immersed in THF for one minute in order to remove the dope solution deposited to the negative electrode. Thereafter, the negative electrode was dried in vacuum at 25°C for five minutes to obtain a doped negative electrode.

The doped negative electrode prepared by the method mentioned above was used to prepare a coin cell. The initial charge/discharge efficiency was calculated and the rate of increase in the weight and the rate of increase in the thickness of the mixture layer were calculated in accordance with the methods mentioned above. The results are shown in Table 1.

[Example 12]

<Preparation of Negative Electrode>

Kneaded were 24.3 parts by mass (solid content: 2 parts by mass) of the sodium polyacrylate aqueous solution having a degree of neutralization of 90%, prepared in Example 1, and 0.6 parts by mass of acetylene black as a conductive aid (manufactured by Denka Company Limited, HS-100) using a compound stirrer for batteries (T.K. HIVIS MIX model 2P-03 manufactured by PRIMIX Corporation). To the paste obtained, 17.4 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. $H_2O$ was added thereto, and the mixture was further kneaded to prepare a negative electrode mixture paste. The volume ratio between the silicon oxide and the carbon particles, as the active material, was 40:60.

This negative electrode mixture paste was applied onto Cu foil (thickness: 18 $\mu$m) as a collector using an applicator and heat-treated to be cured under a nitrogen atmosphere at 150°C for five minutes. Thereby, there was obtained a negative electrode in which the collector and the negative electrode mixture layer were laminated. The mass of the active material in the negative electrode mixture layer after drying was 4 mg/cm$^2$ (unit area).

The negative electrode was predoped with lithium in the same manner as in Example 1. The doped negative electrode prepared by the method mentioned above was used to prepare a coin cell. The initial charge/discharge efficiency was calculated and the rate of increase in the weight and the rate of increase in the thickness of the mixture layer were calculated in accordance with the methods mentioned above. The results are shown in Table 1.

[Example 13]

<Preparation of Carboxylate-Containing Polymer (C)>

To 29.5 parts by mass (solid content: 0.1 mol) of a 25% aqueous solution of polyacrylic acid (manufactured by Wako Pure Chemical Industries, Ltd., molecular weight: about 150,000), 104 parts by mass (solid content: 0.1 mol) of a 1 mol/L sodium hydroxide aqueous solution was added dropwise under stirring to obtain a sodium polyacrylate aqueous solution having a degree of neutralization of 100%. The solid content concentration of this aqueous solution was 7.2%.

<Preparation of Negative Electrode>

Kneaded were 27.8 parts by mass (solid content: 2 parts by mass) of the lithium polyacrylate aqueous solution having a degree of neutralization of 100%, prepared by the method mentioned above and 0.6 parts by mass of acetylene black as a conductive aid (manufactured by Denka Company Limited, HS-100) using a compound stirrer for batteries (T.K. HIVIS MIX model 2P-03 manufactured by PRIMIX Corporation). To the paste obtained, 17.4 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. $H_2O$ was added thereto, and the mixture was further

kneaded to prepare a negative electrode mixture paste. The volume ratio between the silicon oxide and the carbon particles, as the active material, was 20:80.

This negative electrode mixture paste was applied onto Cu foil (thickness: 18 μm) as a collector using an applicator and heat-treated to be cured under a nitrogen atmosphere at 150°C for five minutes. Thereby, there was obtained a negative electrode in which the collector and the negative electrode mixture layer were laminated. The mass of the active material in the negative electrode mixture layer after drying was 4 mg/cm$^2$ (unit area).

The negative electrode was predoped with lithium in the same manner as in Example 1. The doped negative electrode prepared by the method mentioned above was used to prepare a coin cell. The initial charge/discharge efficiency was calculated and the rate of increase in the weight and the rate of increase in the thickness of the mixture layer were calculated in accordance with the methods mentioned above. The results are shown in Table 1.

[Comparative Example 1]

<Preparation of Negative Electrode>

Kneaded were 8 parts by mass (solid content: 2 parts by mass) of a 25% aqueous solution of polyacrylic acid (manufactured by Wako Pure Chemical Industries, Ltd., molecular weight: about 150,000) and 0.6 parts by mass of acetylene black as a conductive aid (manufactured by Denka Company Limited, HS-100) using a compound stirrer for batteries (T.K. HIVIS MIX model 2P-03 manufactured by PRIMIX Corporation). To the paste obtained, 17.4 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. $H_2O$ was added thereto, and the mixture was further kneaded to prepare a negative electrode mixture paste. The volume ratio between the silicon oxide and the carbon particles, as the active material, was 20:80.

This negative electrode mixture paste was applied onto Cu foil (thickness: 18 μm) as a collector using an applicator and heat-treated to be cured under a nitrogen atmosphere at 150°C for five minutes. Thereby, there was obtained a negative electrode in which the collector and the negative electrode mixture layer were laminated. The mass of the active material in the negative electrode mixture layer after drying was 4 mg/cm$^2$ (unit area).

<Lithium Predoping to Negative Electrode>

(Preparation of Solution Including Lithium and Polycyclic Aromatic Compound dissolved (dope solution))

Under an atmosphere of argon, to 17.7 parts by mass of THF (manufactured by Wako Pure Chemical Industries, Ltd., deoxidation grade), 0.51 parts by mass of NAP and 0.067 parts by mass of metal lithium (manufactured by Honjo Metal Co., Ltd.) were added, and the mixture was stirred at 25°C for two hours to prepare a lithium dope solution.

(Step of Lithium Predoping to Negative Electrode)

The negative electrode produced by the above method was immersed in the solution at 25°C for fifteen minutes to predope this negative electrode with lithium. After the negative electrode was taken out from the dope solution, the negative electrode was immersed in THF for one minute in order to remove the dope solution deposited to the negative electrode. Thereafter, the negative electrode was dried in vacuum at 25°C for five minutes to obtain a doped negative electrode.

The doped negative electrode prepared by the method mentioned above was used to prepare a coin cell. The initial charge/discharge efficiency was calculated and the rate of increase in the weight and the rate of increase in the thickness of the mixture layer were calculated in accordance with the methods mentioned above. The results are shown in Table 2.

[Comparative Example 2]

<Preparation of Negative Electrode>

Kneaded were 24.3 parts by mass (solid content: 2 parts by mass) of the sodium polyacrylate aqueous solution having a degree of neutralization of 90%, prepared in Example 1, and 0.6 parts by mass of acetylene black as a conductive aid (manufactured by Denka Company Limited, HS-100) using a compound stirrer for batteries (T.K. HIVIS MIX model 2P-03 manufactured by PRIMIX Corporation). To the paste obtained, 17.4 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. $H_2O$ was added thereto, and the mixture was further kneaded to prepare a

negative electrode mixture paste. The volume ratio between the silicon oxide and the carbon particles, as the active material, was 20:80.

This negative electrode mixture paste was applied onto Cu foil (thickness: 18 μm) as a collector using an applicator and heat-treated to be cured under a nitrogen atmosphere at 150°C for five minutes. Thereby, there was obtained a negative electrode in which the collector and the negative electrode mixture layer were laminated. The mass of the active material in the negative electrode mixture layer after drying was 4 $mg/cm^2$ (unit area).

The negative electrode was predoped with lithium in the same manner as in Comparative Example 1. The doped negative electrode prepared by the method mentioned above was used to prepare a coin cell. The initial charge/discharge efficiency was calculated and the rate of increase in the weight and the rate of increase in the thickness of the mixture layer were calculated in accordance with the methods mentioned above. The results are shown in Table 2.

[Comparative Example 3]

<Preparation of Negative Electrode>

Kneaded were 8 parts by mass (solid content: 2 parts by mass) of a polyacrylic acid aqueous solution similar to that in Comparative Example 1 and 0.6 parts by mass of acetylene black as a conductive aid (manufactured by Denka Company Limited, HS-100) using a compound stirrer for batteries (T.K. HIVIS MIX model 2P-03 manufactured by PRIMIX Corporation). To the paste obtained, 17.4 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. $H_2O$ was added thereto, and the mixture was further kneaded to prepare a negative electrode mixture paste. The volume ratio between the silicon oxide and the carbon particles, as the active material, was 20:80.

This negative electrode mixture paste was applied onto Cu foil (thickness: 18 μm) as a collector using an applicator and heat-treated to be cured under a nitrogen atmosphere at 150°C for five minutes. Thereby, there was obtained a negative electrode in which the collector and the negative electrode mixture layer were laminated. The mass of the active material in the negative electrode mixture layer after drying was 4 $mg/cm^2$ (unit area).

The negative electrode was predoped with lithium in the same manner as in Example 1. The doped negative electrode prepared by the method mentioned above was used to prepare a coin cell. The initial charge/discharge efficiency was calculated and the rate of increase in the weight and the rate of increase in the thickness of the mixture layer were calculated in accordance with the methods mentioned above. The results are shown in Table 2.

[Comparative Example 4]

<Preparation of Carboxylate-Containing Polymer (C)>

To 29.5 parts by mass (solid content: 0.1 mol) of a 25% aqueous solution of polyacrylic acid (manufactured by Wako Pure Chemical Industries, Ltd., molecular weight: about 150,000), 31.2 parts by mass (solid content: 0.03 mol) of a 1 mol/L sodium hydroxide aqueous solution was added dropwise under stirring to obtain a sodium polyacrylate aqueous solution having a degree of neutralization of 30%. The solid content concentration of this aqueous solution was 13.6%.

<Preparation of Negative Electrode>

Kneaded were 14.7 parts by mass (solid content: 2 parts by mass) of a sodium polyacrylate aqueous solution having a degree of neutralization of 30%, prepared by the method mentioned above, and 0.6 parts by mass of acetylene black as a conductive aid (manufactured by Denka Company Limited, HS-100) using a compound stirrer for batteries (T.K. HIVIS MIX model 2P-03 manufactured by PRIMIX Corporation). To the paste obtained, 17.4 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. $H_2O$ was added thereto, and the mixture was further kneaded to prepare a negative electrode mixture paste. The volume ratio between the silicon oxide and the carbon particles, as the active material, was 20:80.

This negative electrode mixture paste was applied onto Cu foil (thickness: 18 μm) as a collector using an applicator and heat-treated to be cured under a nitrogen atmosphere at 150°C for five minutes. Thereby, there was obtained a negative electrode in which the collector and the negative electrode mixture layer were laminated. The mass of the active material in the negative electrode mixture layer after drying was 4 $mg/cm^2$ (unit area).

The negative electrode was predoped with lithium in the same manner as in Example 1. The doped negative electrode prepared by the method mentioned above was used to prepare a coin cell. The initial charge/discharge efficiency was calculated and the rate of increase in the weight and the rate of increase in the thickness of the mixture layer were

calculated in accordance with the methods mentioned above. The results are shown in Table 2.

[Comparative Example 5]

<Preparation of Negative Electrode>

Kneaded were 36.6 parts by mass (solid content: 3 parts by mass) of the sodium polyacrylate aqueous solution having a degree of neutralization of 90%, prepared in Example 1, and 0.6 parts by mass of acetylene black as a conductive aid (manufactured by Denka Company Limited, HS-100) using a compound stirrer for batteries (T.K. HIVIS MIX model 2P-03 manufactured by PRIMIX Corporation). To the paste obtained, 16.4 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. $H_2O$ was added thereto, and the mixture was further kneaded to prepare a negative electrode mixture paste. The volume ratio between the silicon oxide and the carbon particles, as the active material, was 20:80.
This negative electrode mixture paste was applied onto Cu foil (thickness: 18 $\mu$m) as a collector using an applicator and heat-treated to be cured under a nitrogen atmosphere at 150°C for five minutes. Thereby, there was obtained a negative electrode in which the collector and the negative electrode mixture layer were laminated. The mass of the active material in the negative electrode mixture layer after drying was 4 mg/cm$^2$ (unit area).
The negative electrode was predoped with lithium in the same manner as in Example 1. The doped negative electrode prepared by the method mentioned above was used to prepare a coin cell. The initial charge/discharge efficiency was calculated and the rate of increase in the weight and the rate of increase in the thickness of the mixture layer were calculated in accordance with the methods mentioned above. The results are shown in Table 2.

[Comparative Example 6]

<Preparation of Negative Electrode>

Kneaded were 7.3 parts by mass (solid content: 0.6 parts by mass) of the sodium polyacrylate aqueous solution having a degree of neutralization of 90%, prepared in Example 1, and 0.6 parts by mass of acetylene black as a conductive aid (manufactured by Denka Company Limited, HS-100) using a compound stirrer for batteries (T.K. HIVIS MIX model 2P-03 manufactured by PRIMIX Corporation). To the paste obtained, 18.8 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. $H_2O$ was added thereto, and the mixture was further kneaded to prepare a negative electrode mixture paste. The volume ratio between the silicon oxide and the carbon particles, as the active material, was 20:80.
This negative electrode mixture paste was applied onto Cu foil (thickness: 18 $\mu$m) as a collector using an applicator and heat-treated to be cured under a nitrogen atmosphere at 150°C for five minutes. Thereby, there was obtained a negative electrode in which the collector and the negative electrode mixture layer were laminated. The mass of the active material in the negative electrode mixture layer after drying was 4 mg/cm$^2$ (unit area).
The negative electrode was predoped with lithium in the same manner as in Example 1. The doped negative electrode prepared by the method mentioned above was used to prepare a coin cell. The initial charge/discharge efficiency was calculated and the rate of increase in the weight and the rate of increase in the thickness of the mixture layer were calculated in accordance with the methods mentioned above. The results are shown in Table 2.

[Comparative Example 7]

<Preparation of Negative Electrode>

Kneaded were 24.3 parts by mass (solid content: 2 parts by mass) of the sodium polyacrylate aqueous solution having a degree of neutralization of 90%, prepared in Example 1, and 0.6 parts by mass of acetylene black as a conductive aid (manufactured by Denka Company Limited, HS-100) using a compound stirrer for batteries (T.K. HIVIS MIX model 2P-03 manufactured by PRIMIX Corporation). To the paste obtained, 17.4 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. $H_2O$ was added thereto, and the mixture was further kneaded to prepare a negative electrode mixture paste. The volume ratio between the silicon oxide and the carbon particles, as the active material, was 60:40.
This negative electrode mixture paste was applied onto Cu foil (thickness: 18 $\mu$m) as a collector using an applicator and heat-treated to be cured under a nitrogen atmosphere at 150°C for five minutes. Thereby, there was

obtained a negative electrode in which the collector and the negative electrode mixture layer were laminated. The mass of the active material in the negative electrode mixture layer after drying was 4 mg/cm$^2$ (unit area).

The negative electrode was predoped with lithium in the same manner as in Example 1. The doped negative electrode prepared by the method mentioned above was used to prepare a coin cell. The initial charge/discharge efficiency was calculated and the rate of increase in the weight and the rate of increase in the thickness of the mixture layer were calculated in accordance with the methods mentioned above. The results are shown in Table 2.

[Comparative Example 8]

<Preparation of Negative Electrode>

Kneaded were 1 parts by mass (solid content: 0.5 parts by mass) of a SBR aqueous solution as the first negative electrode binding agent, 28.4 parts by mass (solid content: 0.6 parts by mass) of CMC as the second negative electrode binding agent, and 0.7 parts by mass of acetylene black as a conductive aid (manufactured by Denka Company Limited, HS-100) using a compound stirrer for batteries (T.K. HIVIS MIX model 2P-03 manufactured by PRIMIX Corporation). To the paste obtained, 18.2 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. $H_2O$ was added thereto, and the mixture was further kneaded to prepare a negative electrode mixture paste. The volume ratio between the silicon oxide and the carbon particles, as the active material, was 20:80.

This negative electrode mixture paste was applied onto Cu foil (thickness: 18 $\mu$m) as a collector using an applicator and heat-treated to be cured under a nitrogen atmosphere at 120°C for three minutes. Thereby, there was obtained a negative electrode in which the collector and the negative electrode mixture layer were laminated. The mass of the active material in the negative electrode mixture layer after drying was 4 mg/cm$^2$ (unit area).

The negative electrode was predoped with lithium in the same manner as in Example 1. The doped negative electrode prepared by the method mentioned above was used to prepare a coin cell. The initial charge/discharge efficiency was calculated and the rate of increase in the weight and the rate of increase in the thickness of the mixture layer were calculated in accordance with the methods mentioned above. The results are shown in Table 2.

[Table 1]

| | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| Negative electrode active material | Alloy-based material (A) | SiO | SiO | SiO | SiO | SiO | SiO | SiO | SiO | SiO | SiO | SiO | SiO | SiO |
| | Carbon particles (B) | MAGD | MAGD | MAGD | MAGD | MAGD | MAGD | MAGD | MAGD | MAGD | MAGD | MAGD | MAGD | MAGD |
| | (A) volume ratio (vol%/A+B) | 20 | 20 | 20 | 20 | 20 | 20 | 20 | 20 | 20 | 20 | 20 | 40 | 20 |
| Binding agent (carboxylate-containing polymer (C)/other polymer) | Name | PAANa | PAANa | PAALi | PAALi | PAALi | PAALi | PAALi | PAALi | PAANa | PAANa | PAANa | PAANa | PAANa |
| | Content of metal ions (mol%/AH) | 90 | 90 | 90 | 90 | 90 | 85 | 85 | 70 | 50 | 90 | 90 | 90 | 100 |
| | (C) weight rate (%/negative electrode mixture layer) | 5 | 10 | 5 | 7 | 10 | 7 | 10 | 10 | 10 | 10 | 10 | 10 | 10 |
| Predoping catalyst (linear polyphenylene compound (D)/other compound) | Aromatic compound type | BP | BP | BP | BP | BP | BP | BP | BP | BP | oTP | DtBBP | BP | BP |
| | (D) amount (mass μg/electrode area $cm^2$) | 0.16 | 0.53 | 0.14 | 0.23 | 0.31 | 0.24 | 0.33 | 0.30 | 0.45 | 0.36 | 0.63 | 0.74 | 0.37 |
| Capacity of Li-containing negative electrode | Capacity during Li intercalation (mAh/g) | 651 | 670 | 601 | 610 | 624 | 615 | 620 | 643 | 651 | 673 | 620 | 945 | 656 |
| | Capacity during Li deintercalation (1.2 V cut, mAh/g) | 594 | 609 | 546 | 553 | 574 | 560 | 572 | 577 | 594 | 607 | 568 | 825 | 570 |
| Initial charge/discharge efficiency (%) | | 91 | 91 | 91 | 91 | 92 | 91 | 92 | 90 | 91 | 90 | 92 | 87 | 87 |
| Mixture layer, rate of increase in weight (%) | | 2 | 2 | 1 | 3 | 3 | 4 | 5 | 4 | 5 | 4 | 3 | 4 | 2 |

(continued)

| | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|
| Mixture layer, rate of increase in thickness (%) | 11 | 14 | 5 | 7 | 6 | 8 | 10 | 12 | 26 | 9 | 8 | 18 | 12 |

[Table 2]

| | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| Negative electrode active material | Alloy-based material (A) | SiO | SiO | SiO | SiO | SiO | SiO | SiO | SiO |
| | Carbon particles (B) | MAGD | MAGD | MAGD | MAGD | MAGD | MAGD | MAGD | MAGD |
| | (A) volume ratio (vol%/A+B) | 20 | 20 | 20 | 20 | 20 | 20 | 60 | 20 |
| Binding agent (carboxylate-containing polymer (C)/ other polymer) | Name | PAAH | PAANa | PAAH | PAANa | PAANa | PAANa | PAANa | SBR/CMC |
| | Content of metal ions (mol%/AH) | 0 | 90 | 0 | 30 | 90 | 90 | 90 | - |
| | (C) weight rate (%/negative electrode mixture layer) | 10 | 10 | 10 | 10 | 15 | 3 | 10 | 2.5/3 |
| Predoping catalyst (linear polyphenylene compound (D)/ other compound) | Aromatic compound type | NAP | NAP | BP | BP | BP | BP | BP | BP |
| | (D) amount (mass pg/ electrode area $cm^2$) | 0.47 | 0.30 | 0.05 | 0.41 | 0.78 | 0.12 | 0.93 | 0.46 |
| Capacity of Li-containing negative electrode | Capacity during Li intercalation (mAh/g) | 673 | 636 | 720 | 683 | 623 | 665 | 1230 | 637 |
| | Capacity during Li deintercalation (1.2 V cut, mAh/g) | 604 | 579 | 605 | 576 | 527 | 565 | 1049 | 543 |
| Initial charge/discharge efficiency (%) | | 90 | 91 | 84 | 84 | 85 | 85 | 85 | 85 |

(continued)

| | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|
| Mixture layer, rate of increase in weight (%) | 11 | 8 | 4 | 5 | 2 | 2 | 6 | 9 |
| Mixture layer, rate of increase in thickness (%) | 44 | 30 | 25 | 30 | 17 | 8 | 38 | 6 |

As shown in Table 1, in Examples 1 to 13, each of which employs a negative electrode for a secondary battery obtained by predoping a negative electrode including the alloy-based material (A), carbon particles (B), and carboxylate-containing polymer (C) in a negative electrode mixture layer with a solution containing the linear polyphenylene compound (D), the weight and volume of the negative electrode were unlikely to increase due to the predoping, and additionally, the initial charge/discharge efficiency was high.

In contrast, as shown in Table 2, in Comparative Examples 1 and 2, each of which employs a negative electrode obtained by predoping with a solution containing a polycyclic aromatic compound, the weight and volume of the negative electrode increased due to the predoping.

In Comparative Examples 3 to 6, in each of which predoping was carried out with a solution containing the linear polyphenylene compound (D), but the amount of the carboxylate-containing polymer (C) was not 4mass% or more and 13mass% or less, or the degree of neutralization was less than 50%, the initial charge/discharge efficiency was unlikely to increase.

In Comparative Example 8, in which predoping was carried out with a solution containing the linear polyphenylene compound (D), but a binding agent other than the carboxylate-containing polymer (C) was employed, the mass and the volume of the negative electrode were unlikely to increase due to the predoping, but the initial charge/discharge efficiency was unlikely to increase.

This application claims the priority of Japanese Patent Application No. 2016-160748 filed on August 18, 2016, the contents of the claims and the description of the application is incorporated herein by reference.

Industrial Applicability

The non-aqueous electrolyte secondary battery of the present invention has high initial charge/discharge efficiency and a high energy density. Accordingly, the non-aqueous electrolyte secondary battery described above is applicable to various applications.

## Claims

1. A negative electrode for a non-aqueous electrolyte secondary battery, comprising a negative electrode mixture layer comprising at least an alloy-based material that contains silicon or tin capable of absorbing an alkali metal or an alkali earth metal (A), carbon particles (B), a carboxylate-containing polymer (C), and a linear polyphenylene compound (D), wherein
when the total volume of the alloy-based material (A) and the carbon particles (B) contained in the negative electrode mixture layer is taken as 100vol%, the proportion of the volume of the alloy-based material (A) is 10vol% or more and less than 60vol%,
the content of the carboxylate-containing polymer (C) in the negative electrode mixture layer is 4mass% or more and 13mass% or less based on the total mass of the negative electrode mixture layer, and
the degree of neutralization of the carboxylate-containing polymer (C) is 50% or more.

2. The negative electrode for a non-aqueous electrolyte secondary battery according to claim 1, wherein the carboxylate-containing polymer (C) contains 50mol% or more of a structure represented by the following formula (1):

[Formula 1]

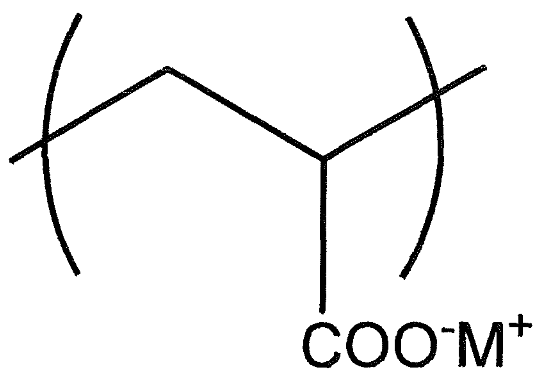

. . . Formula (1)

wherein, $M^+$ is at least one cation selected from $Li^+$, $Na^+$, $K^+$, and $NH_4^+$, and the carboxylate-containing polymer (C) may have a plurality of structures represented by the formula (1) in each of which $M^+$ is different.

**3.** The negative electrode for a non-aqueous electrolyte secondary battery according to claim 1 or 2, wherein the alloy-based material (A) is a silicon oxide represented by $SiO_x$ ($0.5 \leq x \leq 1.5$).

**4.** The negative electrode for a non-aqueous electrolyte secondary battery according to claim 3, wherein
at least a portion of the silicon oxide is coated with carbon, and
the mass of the carbon for coating is 2mass% or more and 50mass% or less based on the total mass of the silicon oxide contained in the negative electrode mixture layer.

**5.** The negative electrode for a non-aqueous electrolyte secondary battery according to any one of claims 1 to 4, wherein the carbon particles (B) comprise at least one graphite selected from the group consisting of natural graphite, artificial graphite, and carbon-coated graphite.

**6.** The negative electrode for a non-aqueous electrolyte secondary battery according to any one of claims 1 to 5, wherein the degree of neutralization of the carboxylate-containing polymer (C) is less than 97%.

**7.** The negative electrode for a non-aqueous electrolyte secondary battery according to any one of claims 1 to 6, wherein the carboxylate-containing polymer (C) contains a lithium salt of polyacrylic acid or a sodium salt of polyacrylic acid.

**8.** The negative electrode for a non-aqueous electrolyte secondary battery according to any one of claims 1 to 7, wherein the linear polyphenylene compound (D) is a biphenyl, terphenyl, or derivative thereof.

**9.** The negative electrode for a non-aqueous electrolyte secondary battery according to any one of claims 1 to 8, wherein the alloy-based material (A) contains an alkali metal or an alkali earth metal.

**10.** A non-aqueous electrolyte secondary battery comprising the negative electrode for a non-aqueous electrolyte secondary battery according to any one of claims 1 to 9.

**11.** A method for producing a negative electrode for a non-aqueous electrolyte secondary battery, the method comprising: obtaining a negative electrode mixture layer by bringing an active material-containing layer comprising at least an alloy-based material that contains silicon or tin capable of absorbing an alkali metal or an alkali earth metal (A), carbon particles (B), and a carboxylate-containing polymer (C), the carboxylate-containing polymer (C) having a degree of neutralization of 50% or more, into contact with an alkali metal or an alkali earth metal that can be absorbed by the alloy-based material (A) in the presence of a linear polyphenylene compound (D), wherein:

when the total volume of the alloy-based material (A) and the carbon particles (B) contained in the negative electrode mixture layer is taken as 100vol%, the proportion of the volume of the alloy-based material (A) is 10vol% or more and less than 60vol%, and
the content of the carboxylate-containing polymer (C) in the negative electrode mixture layer is 4mass% or more and 13mass% or less based on the total mass of the negative electrode mixture layer.

**12.** The negative electrode for a non-aqueous electrolyte secondary battery according to claim 11, wherein the obtaining a negative electrode mixture layer is immersing the active material-containing layer in a solution including the alkali metal or the alkali earth metal and a linear polyphenylene compound (D) dissolved.

**13.** The method for producing a negative electrode for a non-aqueous electrolyte secondary battery according to claim 11 or 12, further comprising immersing the negative electrode mixture layer obtained in a solvent in which the linear polyphenylene compound (D) is soluble.

**14.** The method for producing a negative electrode for a non-aqueous electrolyte secondary battery according to claim 13, wherein the solvent in which the linear polyphenylene compound (D) is soluble is tetrahydrofuran.

**15.** A non-aqueous electrolyte secondary battery, comprising a positive electrode, a negative electrode and an electrolyte solution and containing at least one of an alkali metal and an alkali earth metal, wherein
the negative electrode comprises a negative electrode mixture layer comprising at least an alloy-based material

that contains silicon or tin capable of absorbing at least one of the alkali metal and the alkali earth metal (A), carbon particles (B), a carboxylate-containing polymer (C), and a linear polyphenylene compound (D),
when the total volume of the alloy-based material (A) and the carbon particles (B) contained in the negative electrode mixture layer is taken as 100vol%, the proportion of the volume of the alloy-based material (A) is 10vol% or more and less than 60vol%,
the content of the carboxylate-containing polymer (C) in the negative electrode mixture layer is 4mass% or more and 13mass% or less based on the total mass of the negative electrode mixture layer,
the degree of neutralization of the carboxylate-containing polymer (C) is 50% or more, and
the total molar amount of the alkali metal and the alkali earth metal contained in the negative electrode at full charge is larger than the molar amount of the alkali metal and the alkali earth metal to be calculated from the capacity of the positive electrode active material possessed by the positive electrode.

**INTERNATIONAL SEARCH REPORT**

International application No. PCT/JP2017/029378

A. CLASSIFICATION OF SUBJECT MATTER

*H01M4/133*(2010.01)i, *H01M4/13*(2010.01)i, *H01M4/134*(2010.01)i, *H01M4/139*(2010.01)i, *H01M4/1393*(2010.01)i, *H01M4/1395*(2010.01)i, *H01M4/36*(2006.01)i, *H01M4/38*(2006.01)i, *H01M4/48*(2010.01)i, *H01M4/587*(2010.01)i,

B. FIELDS SEARCHED

Minimum documentation searched (classification system followed by classification symbols)
H01M4/133, H01M4/13, H01M4/134, H01M4/139, H01M4/1393, H01M4/1395, H01M4/36, H01M4/38, H01M4/48, H01M4/587, H01M4/62, H01M10/0566

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
JSTPlus/JST7580(JDreamIII)

C. DOCUMENTS CONSIDERED TO BE RELEVANT

| Category* | Citation of document, with indication, where appropriate, of the relevant passages | Relevant to claim No. |
|---|---|---|
| A | JP 2005-108826 A (Japan Storage Battery Co., Ltd.), 21 April 2005 (21.04.2005), & US 2005/0118083 A1 | 1-15 |
| A | JP 2006-179234 A (Sanyo Electric Co., Ltd.), 06 July 2006 (06.07.2006), (Family: none) | 1-15 |
| A | WO 2016/051811 A1 (Toppan Printing Co., Ltd.), 07 April 2016 (07.04.2016), & US 2017/0040615 A1 & EP 3098881 A1 | 1-15 |
| E,A | JP 2017-152375 A (Shin-Etsu Chemical Co., Ltd.), 31 August 2017 (31.08.2017), (Family: none) | 1-15 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 September 2017 (01.09.17) | 12 September 2017 (12.09.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/029378

Continuation of A. CLASSIFICATION OF SUBJECT MATTER
(International Patent Classification (IPC))

*H01M4/62*(2006.01)i, *H01M10/0566*(2010.01)i

(According to International Patent Classification (IPC) or to both national classification and IPC)

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005108826 A
- JP 2015149224 A
- JP 2016160748 A